# EUROPÄISCHE PATENTANMELDUNG

(11) **EP 4 701 055 A2**
(43) Veröffentlichungstag der Anmeldung: **25.02.2026**
(21) Anmeldenummer: 25197766.6
(22) Anmeldetag: 23.08.2025
(51) Int. Cl.: H02K 15/021, H02K 15/02, H02K 19/10

(54) **VERFAHREN ZUR HERSTELLUNG VON BLECHEN FÜR BLECHPAKETE EINES ROTORS UND/ODER STATORS FÜR DREHSTROMANTRIEBE, INSBESONDERE FÜR RELUKTANZMASCHINEN (RELUKTANZMOTOREN)**

(30) Priorität: 24.08.2024 DE 102024002802
(71) Anmelder: Dr.-Ing. S. Haußmann Industrieelektronik, 72622 Nürtingen (DE)
(72) Erfinder: Wurst, Karl-Heinz, 70563 Stuttgart (DE); Verl, Alexander, 71636 Ludwigsburg (DE); Haußmann, Siegfried, 72622 Nürtingen (DE)
(74) Vertreter: Patentanwälte Jackisch-Kohl und Kohl

(57) **Zusammenfassung**

Das Verfahren dient zur Herstellung von Blechen für Blechpakete eines Rotors und eines Stators für Drehstromantriebe, insbesondere für Reluktanzmaschinen (Reluktanzmotoren) aus magnetischen, insbesondere weichmagnetischen Werkstoffen mittels additiver Fertigungsverfahren, bei dem der magnetisierbare Werkstoff aufgeschmolzen und wenigstens einem Druckkopf (510) zugeführt wird, der den aufgeschmolzenen Werkstoff zur Bildung eines Rotors-/Statorbleches ausbringt. Der aufgeschmolzene Werkstoff wird durch ein angelegtes Magnetfeld (515) so beeinflusst, dass das fertige Rotor-/Statorblech einen die gewünschte Flussrichtung festlegenden Bereich mit hoher magnetischer Leitfähigkeit aufweist.

## Beschreibung

Die Erfindung betrifft ein Verfahren zur Herstellung von Blechen für Blechpakete eines Rotors und/oder Stators für Drehstromantriebe, insbesondere für Reluktanzmaschinen (Reluktanzmotoren) nach dem Oberbegriff des Anspruches 1.

Der Bedarf an Elektroantrieben in der Automatisierungstechnik und der Kraftfahrzeugtechnik nimmt - bedingt durch den Wandel in der Energietechnik - ständig zu. Insbesondere im Bereich der Elektromobilität steigt die Nachfrage nach kostengünstigen, aber dennoch hocheffizienten Elektroantrieben.

Befriedigt wird derzeit die Nachfrage nach hocheffizienten Antrieben primär durch die Bereitstellung permanentmagneterregter Synchronmaschinen, die ihre Drehmomentbereitstellung über rotorseitige Magnete aus Seltenerdenmaterialien bewerkstelligen. Solche Antriebe bieten generell ein hohes Potential zur Leistungssteigerung, jedoch sind die hohen Kosten für permanenterregte Synchronmotoren bei der Verwendung von Seltenerden-Materialien nachteilig bei deren breiten Einsatz. Nicht außer Acht zu lassen sind die Risiken für die Umwelt bei der Gewinnung der Seltenerd-Metalle.

Demgegenüber stellen Reluktanzmotoren eine kostengünstige Antriebsart dar. Der Reluktanzmotor - in der Automatisierungs- und Kraftfahrzeugtechnik häufig als Synchron-Reluktanzmotor eingesetzt - verfügt in seiner Basisversion über einen robusten und kostengünstigen Rotor ohne Magnete und Rotorwicklung. Daraus resultieren geringe Herstellkosten durch den technisch einfachen Aufbau und vergleichbar kostengünstige Materialien für den Rotor. Nachteilig ist sein derzeit geringer Leistungsfaktor.

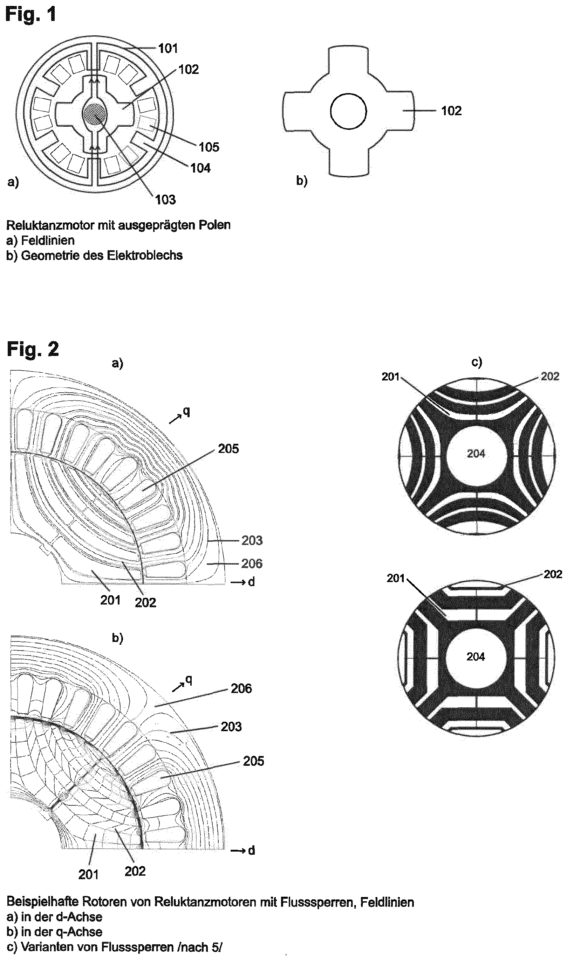

Bekannt sind unterschiedliche Typen von Reluktanzmotoren: geschaltete Reluktanzmotoren (SRM) **(****Fig. 1****)** und Synchron-Reluktanzmotoren (SynRM) **(****Fig. 2****).** Geschaltete Reluktanzmotoren haben konzentrierte Wicklungen und sind in ihrer Funktionsweise und ihrem mechanischen Aufbau vergleichbar mit Schrittmotoren (Reluktanz-Schrittmotor), während Synchron-Reluktanzmotoren verteilte Wicklungen besitzen, über die ein kontinuierlich rotierendes Statorfeld erzeugt wird, dem der magnetisch anisotrope Rotor folgt.

Man kann sich den elektromagnetischen Standard-Schrittmotor (geschalteter Reluktanzmotor) **(****Fig. 1****)** über die Integration mehrerer einzelner Elektromagnete vorstellen, wobei die mechanischen und elektrischen Zustandsänderungen durch impulsförmige Erregerströme erzeugt werden. **Fig. 1a** zeigt beispielhaft eine 4-polige Ausführung. Es können auch höherpolige Ausführungen angewendet werden.

Die Erregerwicklungen 105 sind in der gezahnten Struktur des Stators 104 eingebaut. Jeder Statorzahn wird von einer Spule umformt. Der Rotor 103 trägt weder Wicklung noch Dauermagnet (kostengünstiger Rotor). Daraus ergibt sich, dass im Rotor keine Ströme induziert werden; es wirken nur magnetische Kräfte.

Durch das Anlegen einer Spannung an eine Wicklung 105 im Stator fließt ein Strom. Dieser erzeugt einen magnetischen Fluss 101, der durch den Stator 104 und den Rotor 103 fließt. Der Rotor 103 dreht sich in die Richtung, in welche der magnetische Widerstand für den magnetischen Fluss kleiner wird.

Der einfachste Rotor 103 besteht aus einem gezahnten, massiven Weicheisen mit einem Querschnitt wie 102. Dieser Zustand bewirkt relativ hohe Wirbelströme im Rotor 103 (Wärmeentwicklung), weshalb primär Rotoren 103 aus Weicheisenpaketen aus aufeinanderliegenden Blechen 102 bestehen. Die beispielhafte Geometrie eines Einzelbleches 102 ist in **Fig. 1b** dargestellt.

**Fig. 2** zeigt den Ausschnitt eines beispielhaften Synchron-Reluktanzmotors. In einem Synchron-Reluktanzmotor wird durch die Statorwicklung 205 im Statorblech 206 - wie bei anderen Drehfeldmotoren - ein magnetisches Drehfeld erzeugt. Der Rotor 204 besteht jedoch aus einem runden Blechpaket, aus welchem üblicherweise magnetische Flussbarrieren 201 ausgestanzt sind. Der magnetische Fluss 203 wird über die Flussstege (magnetische Pfade) 202 geführt.

Der Verläufe der Flussbarrieren 201 und der Flussstege 202 im geblechten Rotor 204 bestimmen den magnetischen Fluss und damit auch die Eigenschaften des Motors.

Die in Fig. 2 skizzierte funktionsorientierte Gestaltung von Reluktanzmotoren erfolgt darin am Beispiel eines sogenannten Innenläufers, wie er primär auf dem Markt verwendet wird, d.h., der bewegliche Rotor ist innenliegend.

In **Fig. 2a** ist beispielhaft gezeigt, wie die Flussstege 202 den magnetischen Fluss 203 in der d-Achse des Rotors führen und in **Fig. 2b****,** wie die Flussbarrieren 201 den magnetischen Fluss 203 in der q-Achse des Rotors 204 blockieren, wodurch sich die erforderliche magnetische Anisotropie des Rotors 204 ergibt.

**Fig. 2c** zeigt beispielhafte Geometrien der Einzelbleche des Rotors 204. Die Einzelblech-Struktur des Rotors 204 zeigt Flussstege (magnetische Pfade) 202 unterschiedlicher Reluktanz, die symmetrisch im Rotor verteilt sind. Beispielhaft sind Einzelbleche des Rotors 204 einer 4-poligen Maschine dargestellt.

Die beiden Reluktanzmotor-Typen haben unterschiedliche Vor- und Nachteile, weshalb sie ihren Eigenschaften und Ausprägungen entsprechend in den dafür geeigneten Anwendungsbereichen eingesetzt werden /1/. Die Einzelbleche des Rotors 204 nach **Fig. 2c** verfügen über spezielle Geometrien, gebildet aus magnetisch leitenden Stegen 202 und magnetisch schwach leitenden Luftspalten 201 (Flusssperren), wodurch die notwendige magnetische Anisotropie erzeugt und der magnetische Fluss nach anwendungsspezifischen Vorgaben gezielt geführt werden kann.

Um die Rotoren in ihren Eigenschaften zu verbessern, werden die geblechten Rotoren von Reluktanzmotoren auch mit Permanentmagneten - vornehmlich mit Ferritmagneten - in den Flusssperren 201 ausgestattet. Dies bedingt allerdings einen aufwändigen Herstellungsprozess.

Kennzeichnend für alle Reluktanzmotor-Typen ist jedoch, dass sie in einer Basisversion einen Rotor 204 aufweisen, der weder Permanentmagnete noch Wicklungen oder einen Kurzschlusskäfig besitzt: Der Rotor besteht aus einem weichmagnetischen Material.

D.h., nicht nur die Geometrie des Rotors bestimmt das Betriebsverhalten des Reluktanzmotors, sondern auch der Werkstoff für die Rotorbleche.

Das weichmagnetische Material für die Blechpakete der Rotoren von Reluktanz-Elektromotoren wird meist in Form von sogenannten Elektroblechen bereitgestellt. Diese Elektrobleche werden üblicherweise durch ein aufwändiges Verfahren hergestellt.

Weniger eingesetzt werden massive Rotoren, die aus Rohlingen mit Materialeigenschaften wie diejenigen von Elektroblechen hergestellt werden. Diese sind für Verluste anfälliger, da die im Rotor hervorgerufenen Wirbelströme nicht durch eine Isolierung gedämpft werden.

Der bedeutende Werkstoff für die Rotoren von Reluktanzmotoren ist das ferromagnetische Elektroblech (Eisen + Legierungsbestandteile). Dieser Werkstoff besitzt Bezirke, die eine gemeinsame magnetische Vorzugsrichtung aufweisen. Diese Bezirke werden Domänen (Weissche Bezirke) genannt. Durch die zufällige Verteilung der Domänen wirkt das Material nach außen zunächst unmagnetisiert. Durch ein äußeres Magnetfeld lassen sich die Elementarmagnete ausrichten. Es erfolgt aber kein sprunghafter Richtungswechsel, vielmehr bildet sich eine Ummagnetisierungszone aus, die als Blochwand bezeichnet wird. Die Blochwand verschiebt sich (Verteilung und Verdrehung der Domänen) abhängig vom äußeren Feld. Diese Verschiebung ist abhängig von Materialeigenschaften.

Der Werkstoff für Elektrobleche sollte leicht magnetisierbar sein und niedrige Ummagnetisierungsverluste aufweisen. Diese Eigenschaften werden durch das Herstellungsverfahren des Elektrobleches und der Legierungsbestandteile des Elektrobleches bestimmt.

Das Ausgangsmaterial muss so legiert sein, dass der spezifische elektrische Widerstand möglichst groß ist und die irreversiblen Blochwandverschiebungen möglichst ungehindert ablaufen können. Der Hauptlegierungsbestandteil von Elektroblechen ist deshalb Silizium. Silizium bewirkt eine Erhöhung des spezifischen elektrischen Widerstands als auch eine Erleichterung der Drehprozesse bei der Verdrehung der Domänen. Silizium beeinflusst aber auch negativ die derzeitigen Fertigungsmethoden für die Rotorblechherstellung durch Stanzen und/oder Laserschneiden. Diese Verfahren beeinflussen das ursprüngliche Gefüge der Elektrobleche durch induzierte mechanische Spannungen und Gefügeänderungen derart, dass sich die Ummagnetisierungsverluste erhöhen und sich die Permeabilität verringert.

Dieser Tatsache wurde bereits in der DE 10 2020 130 988 A1 Rechnung getragen. In dem dort vorgestellten *"Verfahren zur Herstellung einer Schichtanordnung aus Elektroblech, danach hergestellte Schichtanordnung, Rotor oder Stator sowie Elektromotor"* wird auf die Herstellung von Schichtanordnungen aus metallischem Pulver hingewiesen, die in bevorzugter Ausgestaltung mit einem hohen Anteil an Silizium (und Aluminium) versehen sind, weshalb ein Elektroband mit diesen Legierungsanteilen durch Walzen nicht hergestellt werden könnte. Ferner wird in der genannten Schrift auch darauf verwiesen, dass Schichten aus metallischem Pulver dieser Zusammensetzung nur durch den Einsatz generativer Fertigungsverfahren hergestellt werden könnten.

Menge und Größe von unmagnetischen Einschlüssen beeinflussen die Blochwandbewegungen und das Kornwachstum. Um die Magnetisierungsverluste und Hystereseverluste klein zu halten, wäre das Elektroblech auch nach der Rohmaterialherstellung, also auch während des Herstellungsprozesses des Rotors bzw. der Rotorbleche, von Verunreinigungen zu befreien und ein möglichst grobkörniges Gefüge durch Wärmebehandlung zu erzeugen.

Neben der negativen Beeinflussung des Gefüges von Rotor-Elektroblechen durch Stanzen und Laserschneiden begrenzen diese Verfahren auch die erzielbaren Blechstärken von Elektroblechen im Rotor. Diese sollten aufgrund des spezifischen elektrischen Widerstands möglichst gering sein, was durch die derzeitigen Herstellungsverfahren Probleme bereitet.

Die Magnetohydrodynamik (MHD) als Teil der Magnetofluiddynamik beschreibt die Wechselwirkungen von Strömungen elektrisch leitfähiger Fluide - im industriellen Anwendungsbereich insbesondere bei der Verarbeitung von Flüssigmetallen und Schmelzen von Legierungen - in elektromagnetischen, statischen und/oder dynamischen Wechselfeldern (Dreh- und Wanderfelder). Beispiele klassischer Einsatzgebiete im industriellen Umfeld sind die Kristallzüchtung oder die Randschichtveredelung von metallischen Werkstoffen.

Seit Langem werden MHD-Technologien in der Metallurgie zum Rühren und Pumpen von Schmelzen eingesetzt. Eine Verbesserung der Eigenschaften von Metallschmelzen in einer Stranggießkokille, d.h. die Entfernung von Einschlüssen, Blasen und Poren in einer Schmelze, wird z. B. durch den Einsatz des MHD-Verfahrens schon in DE 25 28 931 C2 angewandt.

In der europäischen Anmeldung EP 0 613 957 A1 wird z.B. ein Verfahren beschrieben, das bezüglich seiner metallurgischen verfahrenstechnischen Schritte in das erfindungsgemäße Verfahren integriert werden könnte.

Die elektromagnetische Modifizierung von Materialien mittels elektromagnetischer Kräfte findet seit langem in Prozessen, wie Schmelzen, Erstarren, Kristallisieren, Abscheiden von metallischen und anorganisch-nichtmetallischen Materialien in Magnetfeldern, statt /2/.

Der Einsatz des MHD-Verfahrens im industriellen Bereich zur Beeinflussung des Strömungsverhaltens von flüssigen Metallen wird z.B. in DE 102 25 781 B4 gezeigt:
Das Fließen (Strömen) einer Schmelzsäule beim Laserstrahlschweißen aus einer Schweißnaht heraus wird durch die Lorentzkraft, die aus der Wechselwirkung zwischen angelegtem Magnetfeld und flüssiger Schmelze resultiert, nach Prozessanforderungen beeinflusst. Primär wird hier das Fließen abgebremst.

Eine Anwendung des MHD-Verfahrens im Bereich der Additiven Fertigung ist in einem Druckkopf nach WO 2007/038987 zu finden Hier wird das MHD-Verfahren in Form einer Pumpe zum Ausstoßen einer elektrisch leitenden Flüssigkeit (Metall) verwendet. Eine Kombination mit dem MHD- Rühren wird jedoch nicht durchgeführt.

Auch den Verfahren in den Schriften US 2016/ 0307678 A1 und US 2019/0375003 A1 wird der Einsatz von Magnetfeldern zur Beeinflussung von Flüssigmetallen im Druckbereich beim Additiven Druck und in Druckköpfen zugrunde gelegt.

Nach US 2016/ 0307678 A1 soll hierdurch gesteuert eine magnetische Anisotropie innerhalb einer Schicht erzeugt werden.

US 2019/0375003 A1 beschreibt generell eine 3-D-Druckanlage, innerhalb derer zeitlich veränderliche und statische Magnetfelder in einem Druckkopf zum Ausstoßen von magnetischem Partikelmaterial in Tropfenform durch eine Ausgabedüse eingesetzt werden. Die Magnetfelder umgeben auch die Ausbringdüse zur Beeinflussung der Richtung des magnetischen Partikelmaterials.

In US 2021 / 0323070 A1 werden vergleichbare Magnetfeldgeneratoren an der Ausgabedüse eingesetzt, um magnetisches Partikelmaterial in Tropfenform zu zerstäuben. Ein solcher Verfahrensschritt ist für die Beeinflussung der Eigenschaften des Flüssigmetalls mittels Magnetfelder beim Abkühlen bezüglich magnetischen Domänen, Zahl der beweglichen Blochwände und Gefügedefekte (Homogenität) nicht zielführend.

Grundsätzlich ist die Technik der Additiven Fertigung von Rotoren (und Statoren) aus geschichteten Elektroblechen - wobei die Elektrobleche nicht aus vorgefertigten Elektroblech-Coils gefertigt werden, sondern durch Additive Fertigungsverfahren für Metallteile - bekannt.

Als Additive Fertigungsverfahren für Metallteile können verschiedene etablierte Techniken herangezogen werden.

Nicht bekannt ist die Ergänzung und Kopplung der bestehenden Druckverfahren mit der Magnetohydrodynamik (MHD) zum Zwecke der Beeinflussung des Gefüges des Elektrobleches während des Prozesses, und dies sowohl im flüssigen Medium kurz vor dem Erstarren beim Druck, als auch beim Übergang einer metallischen Schmelze vom flüssigen in den festen Zustand und kurz danach.

Die Herstellung von Reluktanzmaschinen mittels eines Additiven Verfahrens ist vom Grundsatz her bekannt /3,4/.

In /3/ werden die bisher angewandten Verfahren zur Additiven Herstellung von Motoren bezüglich einer praxisorientierten Anwendung bewertet.

Nach /4/ werden über einen 3D-Multimaterialdrucker keramische und metallische Werkstoffe verarbeitet, wodurch alle aktiven Teile eines Elektromotors gedruckt werden können. Das Additive Fertigungsverfahren basiert jedoch auf der Verarbeitung von Pasten basierten Werkstoffen, wobei der Rotor aus Keramikmaterial aufgebaut ist. Die Formgebung erfolgt während des Druckvorganges, bei dem hochgefüllte Pasten der Zielmaterialien schichtweise durch eine feine Düse extrudiert werden. Bei einer anschließenden Wärmebehandlung werden die Bindemittel eliminiert und die Partikel zu einem festen Körper verschmolzen. Nachteilig ist die dadurch entstehende poröse Struktur.

Eine Verbesserung der magnetischen Eigenschaften bei der Herstellung von Motoren (Stator und Rotor) in einem Schichtenverfahren soll ein Verfahren nach DE 10 2020 130 988 A1 bewirken. Es wird vorgeschlagen, das weichmagnetische Bauteil aus einer Vielzahl von aufeinandergelegten Blechen als Sinterbauteile auszuführen. Die Gestaltung der Elektrobleche als Sinterbleche soll erweiterte Gestaltungsmöglichkeiten ergeben, die typischen Arbeitsschritte "Stanzen" könnten entfallen und die als Sinterteile ausgebildeten Elektrobleche könnten mit geringeren Dicken hergestellt werden.

Das Verfahren basiert auf dem Auftrag von einer Paste im Siebdruckverfahren. Die Elektrobleche werden durch Sintern gebildet und danach zu einem Stapel verarbeitet.

Ein ähnliches Verfahren nach DE 10 2020 130 988 A1 wird in EP 3 708 938 A1 vorgestellt. Ein Unterschied besteht darin, dass ein sinterfähiges Ausgangsmaterial in Pulver- und/oder Pastenform verwendet wird, und dies nicht nur in einer Ausprägung, sondern indem mindestens zwei unterschiedliche, metallhaltige, sinterfähige Ausgangsmaterialien verwendet werden. Dadurch soll erreicht werden, dass innerhalb einer Schicht unterschiedliche, spezielle Schichteigenschaften hergestellt werden können.

In EP 3 715 018 A1 wird das zuvor genannte Verfahren um einen Verfahrensschritt erweitert, der zum Inhalt hat, ferromagnetische und antiferromagnetische Partikel in einer vorgegebenen Richtung auszurichten.

In der EP 3 180 141 B1 wird ein Verfahren zur Herstellung von Magnetkörpern vorgestellt, in dem in einem weiteren Schritt mittels Additiver Fertigung Bereiche mit unterschiedlichen magnetischen Eigenschaften hergestellt werden. Es beruht auf der seit langem bekannten Kenntnis, dass Magnetisierungswerte von der Korngröße des Werkstoffes abhängig sind. In EP 3 180 141 B1 wird diese Eigenschaft vorteilhaft umgesetzt, indem Bereiche unterschiedlicher Körnungen bei der Additiven Fertigung geschaffen werden.

Verfahrenstechnisch wird dies dadurch erzielt, dass erste Schichten für den herzustellenden Magnetkörper vorbestimmte Bereiche mittels pulverbasierter Additiver Fertigungsverfahren und mit zuvor spezifizierten Werkstoffpulvern hergestellt werden, um dann zweite Schichten, die sich in ihrer Spezifikation von den ersten Schichten unterscheiden, zu ergänzen. Das Bilden unterschiedlicher Schichten durch das Verschmelzen in vorbestimmten Bereichen zusammen mit der Generierung notwendiger Isolationsschichten ist technisch notwendig, aber wirtschaftlich kaum umsetzbar.

Der Erfindung liegt die Aufgabe zugrunde, das gattungsgemäße Verfahren so auszubilden, dass die Blechpakete für Rotoren und/oder Statoren in verfahrenstechnisch einfacher Weise mit verbesserten Leistungsfaktoren für Reluktanzmotoren bzw. Rotoren für Reluktanzmotoren hergestellt werden können.

Diese Aufgabe wird beim gattungsgemäßen Verfahren erfindungsgemäß mit den kennzeichnenden Merkmalen des Anspruches 1 gelöst.

Das erfindungsgemäße Verfahren beruht auf dem Einsatz bekannter Additiver Fertigungsverfahren und dem MHD-Verfahren (MHD-Magnetohydrodynamik). Die Magnetohydrodynamik beschreibt Vorgänge, bei denen Strömungsbeeinflussungen von z.B. Metallschmelzen gezielt über elektromagnetische Felder vorgenommen werden.

Mit dem erfindungsgemäßen Herstellungsverfahren kann das Gefüge während des Herstellungsprozesses im Arbeitspunkt bei der Additiven Herstellung bezüglich anwendungsspezifischer Eigenschaften positiv beeinflusst werden. Der Arbeitspunkt Ist hierbei ein fiktiver Punkt am Düsenausgang des Druckkopfes, der die programmierte Bahn der Düse beim Aufbringen des Materials beschreibt.

Der Werkstoff wird in der Flüssigphase auf einer Aufbauplatte durch ein angelegtes Magnetfeld eines Stators/Rotors beim Übergang von der Flüssigphase in den festen Zustand so beeinflusst, dass das fertige Rotor/Statorblech dadurch eine dem eingeprägten Feldverlauf ausgerichtete Flussrichtung hoher magnetischer Leitfähigkeit aufweist.

Beim erfindungsgemäßen Verfahren mit flüssigem Metall am Ausgang des Druckkopfes wird während des Erstarrens das Metall in seinen Eigenschaften bezüglich magnetischer Domänen, Zahl der beweglichen Blockwände und Gefügedefekte (Homogenität) durch magnetische Gleich- und Wechselfelder nach einem gezielt vorgegebenen magnetischen Flussverlauf beeinflusst. Beispielhaft kann dies anhand zweier angenommenen magnetischen Leitfähigkeiten (Permeabilitäten) verdeutlicht werden: Wenn sich entlang des eingeprägten Feldverlaufs eine Permeabilität von 5000 ergeben würde, dann wäre diese z.B. höher als eine Permeabilität von 2000 in davon abweichenden Richtungen.

Die magnetohydraulische Beeinflussung im Düsenbereich hat die Aufgabe, den Metallausstoß im Düsenbereich zu dosieren und zu glätten (Turbulenzen bedämpfen), um definierte metallische Druckbahnen erzeugen zu können. Die steuer- und regelungstechnischen Funktionen innerhalb des Materialflusses werden diesen Anforderungen entsprechend ausgeführt.

Die komplexe Verfahrenskette zur Herstellung von Eisensiliziumwerkstoffen für Elektrobleche und Rotoren von Reluktanzmotoren und damit die gesamte Verfahrenskette zur Herstellung der Rotoren wird in ein Maschinensystem zur Additiven Fertigung integriert, wobei die Schmelzlegierung als Ausgangsmaterial und die Schmelze im Arbeitspunkt des Additiven Verfahrens durch Magnetfelder in ihren Eigenschaften beeinflusst wird.

Dies ist möglich, da nicht wie bei konventionellen Verfahrensketten erst das Ausgangsmaterial für die Elektroblech-Coils hergestellt wird und danach die Elektrobleche für die Rotoren, sondern nur so viel Material den notwendigen metallurgischen Prozessen bereitgestellt werden muss, wie in einer vorgegebenen Zeiteinheit im Additiven Prozess zum Druck einer Schicht im momentanen Arbeitspunkt eingesetzt wird.

Für das erfindungsgemäße Verfahren ist es kennzeichnend, dass die Dickenbereiche der Bleche korrespondieren mit den realisierbaren Schichtdicken bei der Additiven Fertigung. Legt man derzeitige Bahngeschwindigkeiten beim Metalldruck zugrunde, dann kann man dem erfindungsgemäßen Verfahren ein zu erwartendes Zeit-Druckvolumen von ca. 10 cm³/min zugrunde legen. Solche Volumina können durch bekannte induktive Verfahren zur Herstellung einer Schmelze in einem Schmelztiegel dem Druckprozess im Arbeitspunkt im notwendigen Zeitraster zur Verfügung gestellt werden. Das geringe, notwendige Schmelzvolumen pro Zeiteinheit kann damit vorteilhaft in Schmelztiegeln bereitgestellt werden, die in ihren geometrischen Dimensionen problemlos in eine 3-D-Druckmaschine integriert werden können.

Über das erfindungsgemäße Herstellungsverfahren können aber auch massive Rotorstrukturen hergestellt werden, die verbesserte magnetische Eigenschaften aufweisen. Da das erfindungsgemäße Herstellungsverfahren sowohl die Herstellung von massiven als auch von geschichteten (lamellierten) Rotoren ermöglicht, wird im Folgenden das Verfahren nur für die aufwändiger herzustellenden geschichteten Rotoren beschrieben.

Über das erfindungsgemäße Herstellungsverfahren kann auch die Problematik der negativen Gefügebeeinflussung und der Blechdickenbegrenzung eliminiert werden.

Negative Materialeigenschaften, wie Lunker, Materialfehler, nichtmagnetische Einschlüsse, Korngrenzen und Kristallgittereffekte (Versetzungen), die bisher vermehrt bei der konventionellen Herstellung von Elektroblechen für Rotoren von Reluktanzmotoren auftreten, werden reduziert und auch vermieden.

Beim erfindungsgemäßen Verfahren wird eine vorgegebene magnetische Flussrichtung erzielt, wobei hierzu ein steuerbares MHD-Verfahren eingesetzt wird.

Durch den Druck mit unterschiedlichen Metalllegierungen und der notwendigen Ansteuerung des MHD-Verfahrens können innerhalb einer Schicht unterschiedliche spezielle Schichteigenschaften hergestellt werden.

Grundsätzlich ist das erfindungsgemäße Verfahren für Reluktanzmotoren in deren Bauform sowohl als Innenläufer als auch als Außenläufer anwendbar.

Bei der Bauform als Innenläufer, bei der das bewegliche Teil (Rotor) innen liegt, erfolgt die Magnetfeldgenerierung zur Materialbeeinflussung während des Druckprozesses mit einem außenliegenden Magnetfeldgenerator.

Bei der Bauform als Außenläufer, bei der sich der bewegliche Rotor (Läufer) außen befindet, erfolgt die Magnetfeldgenerierung zur Materialbeeinflussung mit einem innenliegenden Magnetfeldgenerator.

Die im Weiteren beschriebenen Verfahrensschritte sind für beide Anordnungen der Magnetfeldgeneratoren identisch.

Die Erfindung wird anhand einiger in den Zeichnungen dargestellter Ausführungsformen näher erläutert. Es zeigen
- Fig. 1: einen Reluktanzmotor mit ausgeprägten Polen,
- Fig. 2: beispielhafte Rotoren von Reluktanzmotoren mit Flusssperren,
- Fig. 3: ein Flussdiagramm des erfindungsgemäßen Verfahrens,
- Fig. 4: ein Detail des Verfahrensschritts S8 des erfindungsgemäßen Verfahrens nach Fig. 3,
- Fig. 5: in schematischer Darstellung integrierte Maschineneinheiten zur Umsetzung des erfindungsgemäßen Verfahrens,
- Fig. 6: in schematischer Darstellung einen Feldverlauf für die Magnetfelderzeugung zur Beeinflussung der Schmelze während des Druckvorgangs,
- Fig. 7: beispielhafte Geometrien von aus nichtmagnetischem Material bestehenden Einzelblechen für Rotorgeometrien ohne Luft-Fluss-Sperren,
- Fig. 7a: einen Schnitt längs der Linie A - A in Fig. 7,
- Fig. 8a und 8b: Elektroblechanordnungen im Rotor,
- Fig. 9: einen schematischen Feldverlauf für die Magnetfelderzeugung bei einem Außenläufer.

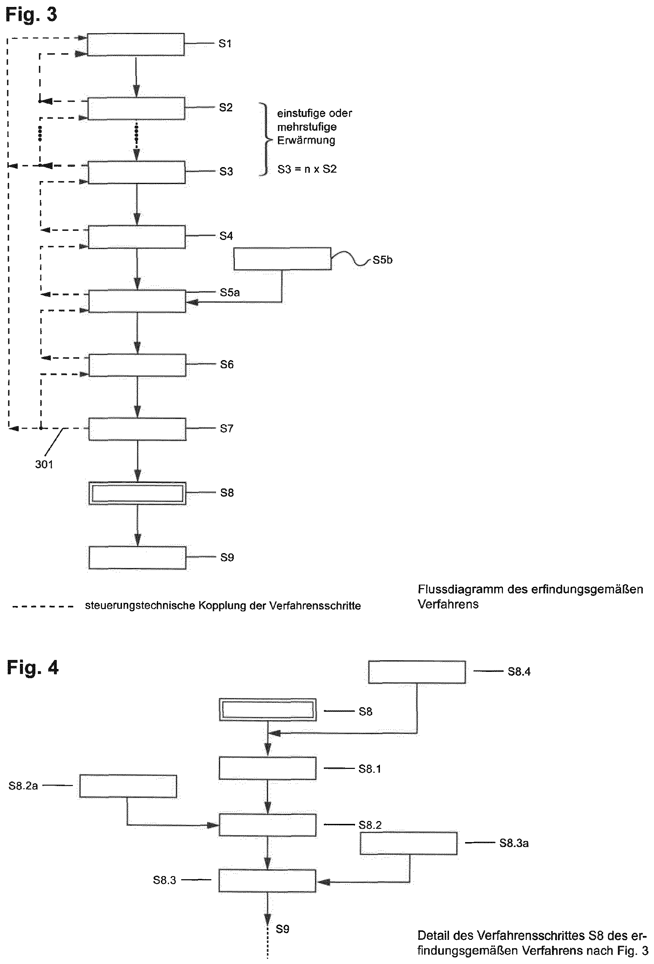

Anhand von Fig. 3 wird zunächst der Verfahrensablauf zur Herstellung der Bleche im Überblick erläutert.

Im Verfahrensschritt S1 wird der Werkstoff als Halbzeug, beispielsweise in Form einer Metalllegierung, zugeführt. Beim Halbzeug handelt es sich um in Form und Eigenschaften vorgefertigte Materialien, deren Legierungsbestandteile abgestimmt sind auf die magnetischen Eigenschaften der additiv zu fertigenden Elektroblechscheibe für einen Rotor. Die Zuführung erfolgt mit mindestens einer Zuführeinheit.

Im Verfahrensschritt S2 wird das Halbzeug erwärmt und geschmolzen mit Hilfe wenigstens einer Induktor-Schmelzeinheit. Die Erwärmung kann ein- oder mehrstufig erfolgen, vorzugsweise in einem Durchlaufverfahren (Verfahrensschritte S2 oder S3).

Mit wenigstens einer magnetohydrodynamischen (MHD) Transporteinheit wird die Metallschmelze im Verfahrensschritt S4 transportiert.

Mit dem Verfahrensschritt S5a wird eine homogene Schmelze erzeugt, die Gesamtschmelze zwischengespeichert, temperiert und MHD-gerührt.

Im Verfahrensschritt S5b können optional Legierungsbestandteile als Metallgranulat oder Metallschüttgut oder beispielsweise als Recyclingmaterial der Metallschmelze zugeführt werden.

Im Verfahrensschritt S6 wird das Schmelzgut dosiert in wenigstens einen Druckkopf transportiert. Hierfür ist wenigstens eine MHD-Transport- und Schmelzeinheit vorgesehen.

Das Schmelzgut wird im Verfahrensschritt S7 durch ein magnetisches Gleichfeld temperiert und bedämpft. Es erfolgt eine Bewegungsbeeinflussung im Längsfeld. Das Schmelzgut wird in Tropfenform oder kontinuierlich als Teilschmelzen-Strang mit der Querschnittsgeometrie der Druckkopfdüse aus dem Druckkopf ausgestoßen. Der Druckkopf zur Tropfen- und Metallraupen-Erzeugung aus einer flüssigen Metalllegierung für die Bleche kann als koppelbares Modul an eine Speichereinheit ausgebildet und mit wenigstens einem Düseninjektor ausgestattet sein.

Im Verfahrensschritt S8 erfolgen eine MHD-Beeinflussung der Schmelze und deren Erstarrungsvorganges während des Materialauftrages auf beispielsweise einer Druckplatte oder Aufbauplatte. Hierbei wird vorteilhaft eine Magnetisierungseinheit zum MHD-Rühren und zur magnetischen Texturierung während der Herstellung des Bleches eingesetzt.

Die Fertigstellung des Blechpaketes erfolgt im Verfahrensschritt S9. Es wird eine variotherme Temperierung der Druckplatte bzw. der Aufbauplattform für das Blech vorgenommen.

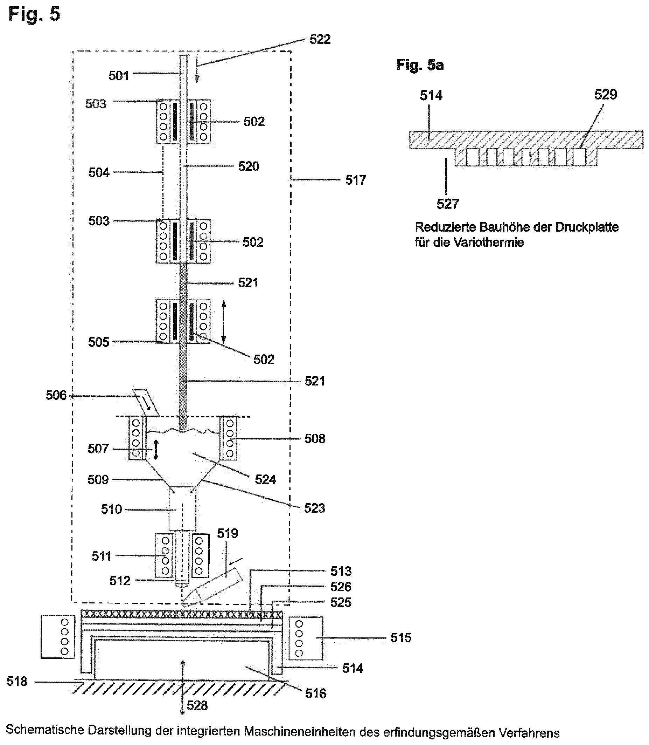

Die einzelnen Maschineneinheiten für die Verfahrensschritte können als Gesamteinheit 517 aufgebaut werden, die beispielhaft in Fig. 5 vereinfacht dargestellt ist. Aufgrund der auftretenden und zu erwartenden variablen Schmelzvolumina, Werkstofflegierungen, Prozessgeschwindigkeiten beim Materialauftrag für die Elektroblechgenerierung und der Variation der geometrischen Größen der Elektrobleche (Rotordurchmesser) ist aber für das erfindungsgemäße Verfahren vorteilhaft, die einzelnen Verfahrensschritten des erfindungsgemäßen Verfahrens über eine modulare Strukturierung des Gesamtsystems innerhalb einer Basismaschine umzusetzen. Insbesondere solche Module, die verschleißanfällige Komponenten beinhalten (Schmelztiegelmaterialien), können damit unproblematisch ausgetauscht werden.

Die Module für die einzelnen Verfahrensschritte **S1** bis **S9** werden hierzu vorteilhaft mit einer einheitlichen mechanischen Schnittstelle versehen. Weiterhin verfügt jedes Modul - thermisch isoliert - eine Kommunikationsschnittstelle, eine Sensorschnittstelle und eine Schnittstelle zur variablen Leistungsversorgung der Induktoren und MHD-Einheiten.

Fig. 5 zeigt beispielhaft die Gesamtheit 517 zur Herstellung von Rotorblechen für einen Innenläufer mit den Modulen. Eines dieser Module ist eine MHD-Einheit 505, 508, 511. Die MHD-Einheit besteht hierbei aus einer oder mehreren Spulenanordnungen, die einen Materialträger und/oder -speicher umgeben und die in ihrer erzeugbaren magnetischen Feldstärke, ihrer Frequenz des eingeprägten elektrischen Stroms und deren Amplitude steuerbar und regelbar sind. Beispielhaft und in vereinfachter Darstellung sind diese in **Fig. 5** zur Umsetzung unterschiedlichen Verfahrensschritte dargestellt (505, 508 und 511). Die Spulenanordnungen, die im Detail nicht dargestellt sind, erfolgen entsprechend der notwendigen Funktionen des Moduls innerhalb der Verfahrenskette zur Vorgabe des gewünschten Strömungsverhaltens für das flüssige und/oder halbflüssige Metall.

Alle Verfahrensmodule sind so abgekapselt, dass die Verfahrensschritte innerhalb eines Moduls unter geeigneter Gasatmosphäre und/oder Vakuum durchgeführt werden können. Die modulare Strukturierung der Maschineneinheiten hat keine Auswirkung auf die Verfahrensschritte S1 bis S9 für das erfindungsgemäße Verfahren, weshalb die Modulschnittstellen nicht dargestellt sind.

Eine Steuerungseinheit, die als zentrale Einheit ausgeführt sein kann und in **Fig. 5** nicht dargestellt ist, steuert zur Erzielung eines vorgegebenen Prozessziels, d.h. zur Erzielung der gewünschten Eigenschaften des gedruckten Elektrobleches auf der Basis von Sensordaten und/oder auf der Basis von parallel generierten Simulationsergebnissen aus einem "Digitalen Zwilling" (Prozessmodell) die Verfahrensmodule - und damit die Spulenanordnungen - an. Alle Module sind hierzu bidirektional über steuerungstechnische und kommunikationstechnische Mittel 301 miteinander gekoppelt. Diese Kopplung kann mit marktgängigen Mitteln durchgeführt werden und ist deshalb nicht im Detail dargestellt.

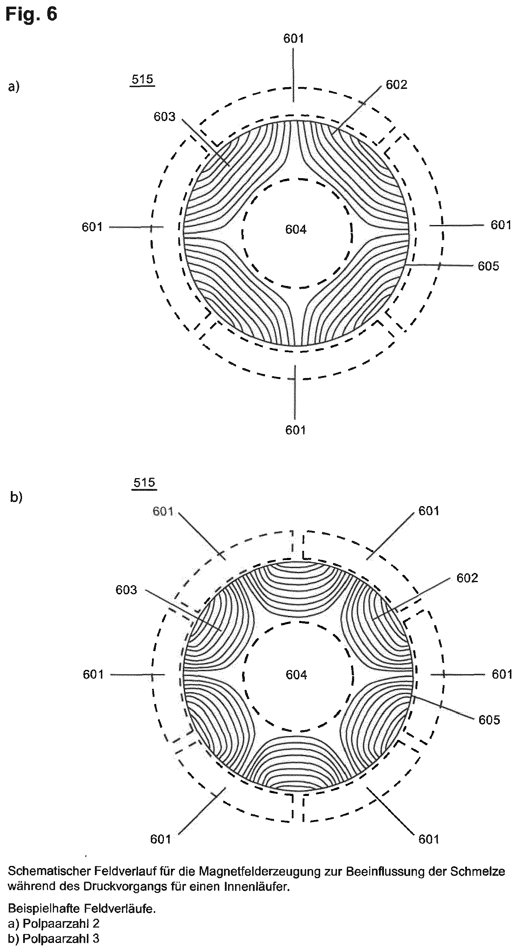

Dies betrifft insbesondere die Vorgabe des magnetischen Flussverlaufs als Ergebnis einer Simulation des magnetischen Flussverlaufs mit einer statorähnlichen Magnetisierungseinheit 515 (Fig. 5) für den Bahnverlauf 602 in **Fig. 6** der Druckdüse beim Druck der Elektrobleche. Dieser Verfahrensschritt ist vorteilhaft für die optimale Erzielung der gewünschten Prozessergebnisse, jedoch nicht zwingend. Zahl und Form der Flussbarrieren und damit der magnetische Flussverlauf können damit über eine Simulation und/oder über eine Bahnprogrammierung vorgegeben werden.

Vorzugsweise kann die Ansteuerung bei einer modularen Strukturierung des Verfahrens über eine jeder Verfahrenseinheit zugeordneten, modulintegrierten - thermisch isolierten - Steuerung erfolgen.

Dies ist weiterhin dann vorteilhaft, wenn in jedem Modul alle Prozessinformationen der anderen am Verfahren beteiligten Module vorhanden sind. Jedes Modul ist damit in der Lage, online autark Entscheidungen zur Prozessführung zu treffen. Lediglich Sollgrößen von Geometrien für die Rotor-Elektrobleche, Materialeigenschaften, Parameter für Ströme, Spannungen und Frequenzen für die Magnetfelderzeugung und Temperaturen werden dann noch zentral vorgegeben.

Die Flussdiagramme nach **Fig. 3** und **Fig. 4** verdeutlichen die Abfolge der einzelnen Verfahrensschritte innerhalb des Gesamtverfahrens. Als erster Verfahrensschritt **S1** in **Fig. 3** - verbunden mit einer technischen Umsetzung als austauschbares, den Prozessvarianten anpassbares Modul - steht die Werkstoffzuführung für die Ausgangsschmelze.

**Fig. 5** zeigt die beispielhafte Anlage zur Durchführung des Verfahrens. Auf den beschriebenen Aufbau der Anlage ist die Anlage nicht beschränkt. Es sind vielfältige Ausführungen einer solchen Anlage möglich. Anhand von **Fig.5** werden die einzelnen Verfahrensschritte S1-S9 in **Fig. 3** und **Fig. 4** erläutert. Die Anlagenteile sind durch eine steuerungs- und kommunikationstechnische Koppelung 301 miteinander verbunden, die nur schematisch dargestellt ist.

Ein Halbzeug aus weichmagnetischem Material 501 wird mit einer gesteuerten und geregelten Materialzuführung 522, die beliebig gestaltet sein kann, einem Schmelztiegelsystem 504 zugeführt **(S1).** Es besteht aus wenigstens einem Schmelztiegel 502 aus einem schmelzgutangepassten Werkstoff. Der Schmelztiegel 502 ist beispielhaft als offener Tiegel ausgebildet. Zur Erwärmung und zum Schmelzen des Halbzeugs 501 ist wenigstens eine stromdurchflossene Induktorspule 503 vorgesehen, die den Schmelztiegel 502 umgibt. Der Schmelztiegel 502 ist als Suszeptor ausgebildet. Da solche Suszeptoren bekannt sind, werden sie nicht näher erläutert.

Außerdem ist das Schmelztiegelsystem mit einer nicht dargestellten Spulenkühlung versehen und von einer nicht dargestellten Gasatmosphäre umgeben.

Das Halbzeug 501 wird beim Durchlaufen durch das Schmelztiegelsystem 504 erwärmt.

Eine modulare Gestaltung des Schmelztiegelsystems 504 (stromdurchflossene Spule mit Schmelztiegel aus schmelzgutangepasstem Werkstoff, Spulenkühlung und Suszeptoren) zur Anpassung des Schmelztiegelsystems an unterschiedliche, zu schmelzende Materialien ist prozesstechnisch möglich und für das Verfahren vorteilhaft, da die Baugröße eines Schmelztiegelsystems 504 aufgrund der geringen Materialmengen/Zeiteinheit für die Additive Fertigung gering ist. Handelt es sich um kleinere zu schmelzenden Mengen an Halbzeug 501 pro Zeiteinheit, kann das Halbzeug 501 beim Durchlaufen durch das Schmelztiegelsystem 504 - bestehend aus wenigstens einem Schmelztiegel 502 - erwärmt und geschmolzen werden (Verfahrensschritt **S2** - einstufige Erwärmung). Bei größeren Mengen an Halbzeug, die in einer vorgegebenen Zeiteinheit nicht erwärmt und geschmolzen werden können, erfolgen die Erwärmung und das Schmelzen in einem zwei- oder mehrstufigen Verfahren (Verfahrensschritt **S3**). Dann sind zwei oder mehrere Schmelztiegel 502 vorgesehen. Im dargestellten Ausführungsbeispiel ist die Anlage zur stufenweisen Erwärmung mit zwei hintereinander liegenden Schmelztiegeln 502 versehen, die das Schmelztiegelsystem 504 bilden und durch die das Halbzeug 501 geführt wird.

Die Spulen des Induktorsystems 503 - in **Fig. 5** nicht mit spezifischer Merkmalsausprägung dargestellt - dienen zur Querfeld- und Längsfelderwärmung des Halbzeugs 501.Der Unterschied zwischen den Induktoren für die Längsfeld- und Querfelderwärmung liegt in dem jeweiligen, aus der Anordnung resultierenden elektromagnetischen Feld und dem damit verbundenen Erwärmungsverhalten. Bei der Längsfelderwärmung verläuft das Magnetfeld in der Ebene des zu erwärmenden Halbzeugs, das einem dünnen Band entspricht. Das Material wird vollständig vom Induktor umschlossen. Bei der Querfelderwärmung werden die Induktoren so angebracht, dass das elektromagnetische Feld senkrecht zur Ebene des zu erwärmenden Halbzeugs verläuft. Vorteilhaft bei der Verwendung von Halbzeugen mit den angegebenen Geometrien ist die Querfelderwärmung. Die Spulen sind jedoch immer so angeordnet, dass die Feldlinien der von ihnen generierten Magnetfelder ihrer Aufgabe entsprechend die gewünschte Richtung aufweisen. Die Längsfelderzeugung (Wanderfeld) dient zum richtungsbeeinflussenden Schmelzentransport und zur Temperierung.

Die Induktorspulen für die Querfeld- und Längsfelderwärmung sowie für das Rühren der Schmelzen in einem Zwischenspeicher 508 sind an prozessbestimmende Größen, wie maximal notwendige Stromstärken, Frequenzbandbreiten und maximal geforderten Material-Durchflussgeschwindigkeiten, sowie an die Erfordernisse einer Modulbauweise angepasst, d.h., sie sind auf ein Minimum an Windungen ausgelegt, um einen geometrisch kompakten Systemaufbau in einem Maschinensystem zu gewährleisten.

Der Zwischenspeicher 508 ist mit wenigstens einer MHD-Rühr- und Transporteinrichtung und mit wenigstens einer Temperiereinheit versehen.

Als Werkstoffe für die Schmelztiegel 502 können bekannte Materialien, wie Graphit, Siliziumcarbid und/oder Oxidkeramik - in Geometrie und Material zur Minimierung des Skin-Effekts grundsätzlich dem Schmelzgut angepasst - eingesetzt werden.

Erwärmung, Schmelzen und gegebenenfalls Überhitzung des zu verarbeitenden Materials 501 erfolgen vorzugsweise über eine direkte Erwärmung durch induktive Querfelderwärmung **(S2 und S3),** die insbesondere für Materialen mit kleinem Querschnitt Vorteile hinsichtlich der Erwärmungsgeschwindigkeit bietet. Als Materialien mit kleinem Querschnitt können vorteilhaft weichmagnetische Werkstoffe in Drahtund/oder Bandform eingesetzt werden, die als Halbzeuge mit unterschiedlichen Querschnitten auf dem Markt - zum Beispiel als weichmagnetische Legierungen mit Durchmessern von 0.2-5 mm - zur Verfügung stehen.

Über geschwindigkeitsgeregelte Zuführungseinrichtungen 522, die beispielhaft und vergleichbar mit Zuführungseinrichtungen etablierter FDM-Verfahren sind, können diese Halbzeuge 501, die schon aus der gewünschten Legierung für die Elektrobleche bestehen und/oder die im Zwischenspeicher 508 noch durch Zusatzwerkstoffe legiert werden können, steuerungstechnisch gekoppelt dem Zwischenspeicher 508 im notwendigen Zeitraster online kontinuierlich zugeführt werden (S4). Der Schmelztiegel 502 ist hierbei vorteilhaft als offener Tiegel - umschlossen von der stromdurchflossenen Spule - rohrförmig ausgeführt (rohrförmiger Suszeptor), wodurch die Erwärmung über dem Curiepunkt zusätzlich über Wärmeleitung und/oder Wärmestrahlung erfolgen kann.

Die Zuführungsgeschwindigkeit für das Halbzeug 501 in Form einer Weicheisenlegierung als Stellglied einer gesteuerten und/oder geregelten Flüssigmetallverarbeitung bei der Elektroblechherstellung wird in Abhängigkeit der Stromstärke und der Frequenz des Stromes des Induktionssystems 503 - werkstoff- und geometrieabhängig vom Halbzeug 501 - ermittelt und als Parameter vorgegeben.

Über das stufenweise Erwärmen und Schmelzen (S3) über hintereinandergeschaltete rohrförmige Schmelztiegel 502 kann das Schmelzvolumen/Zeiteinheit frequenz- und leistungsgesteuert gesteigert werden. Der negative Einfluss des Skin-Effektes, nämlich eine verzögerte, inhomogene Erwärmung des Werkstoffes bis zur Schmelze lässt sich dadurch stufenweise verringern.

Der nachfolgende Verfahrensschritt **(S4)** für das erfindungsgemäße Verfahren besteht in der Weiterleitung des Schmelzguts und/oder der Teilschmelze 521 (teilflüssiger oder flüssiger Zustand) über ein Transportmodul 505 in einen Schmelztiegel 509 des Zwischenspeicher/Bereitstellungsbereiches 508 für den Druckkopf 510. Im Gegensatz zu den bekannten Druckverfahren erfolgt die Aufschmelzung nicht im Druckkopf, sondern ist diesem vorgelagert.

Ein gezielt gesteuerter und/oder geregelter Weitertransport kann vorzugsweise über ein weiteres Schmelztiegelsystem mit Längsfelderwärmung 505 erfolgen. Das elektromagnetische Feld wirkt hierzu in Richtung und/oder gegen die Richtung der Schwerkraft 507. Die Schmelze 521 kann somit durch ein Wanderfeld aktiv gesteuert werden, was auf demselben Prinzip beruht, das auch bei Lineardirektantrieben angewandt wird, das heißt, die Bewegung der Schmelze 521 kann beschleunigt und/oder abgebremst werden. Stromstärken, Frequenzen und Feldrichtungen können den Erfordernissen entsprechend eingestellt werden. Vorteilhaft ist es, wenn Wechselfelder in Richtung, Frequenz und Amplitude überlagert werden können mit Gleichfeldern.

Die Weiterleitung kann aber auch durch ein einfaches Abtropfen des Schmelzguts 521 in einen weiteren, geschlossenen Schmelztiegel 509 des Zwischenspeicher/Bereitstellungsbereiches 508 erfolgen. Der Zwischenspeicher/Bereitstellungsbereich 508 beinhaltet als Modul den Verfahrensschritt (S5a) "Magnetohydrodynamisches Metallrühren (MHD)" und das Einhalten der erforderlichen Schmelzguttemperatur für den Druckprozess.

Hierzu sind im Zwischenspeicher/Bereitstellungsbereich 508 Spulenanordnungen zur Strömungsbeeinflussung der Schmelze 524 mittels Magnetfelder vorgesehen. Aus den Wechselwirkungen zwischen induzierten Magnetfeldern und flüssiger Schmelze resultieren Lorentzkräfte, die die gewünschten Strömungen in der Metallschmelze bewirken.

Über Leistungsstellglieder, die unterschiedliche, hohe elektrische Ströme in Frequenz und Amplitude schnell (Millisekunden-Bereich) seriell schalten können und somit einen schnellen, seriellen Aufbau unterschiedlicher Magnetfelder ermöglichen (Millisekunden-Bereich), können Spulenanordnungen und Stellglieder zur Realisierung unterschiedlicher Verfahrensfunktionen eingesetzt werden (Transportieren, Rühren Erwärmen etc.), wodurch der Aufwand von Komponenten erheblich reduziert werden kann. Die Spulenanordnungen sowohl für das MHD-Rühren 508 als auch für die Erzeugung einer Kraft 507 für das Transportieren der Schmelze sind abhängig von der konstruktiven Ausführung des Zwischenspeicher- und Bereitstellungsbereichs 508, deshalb in **Fig. 5** nicht detailliert dargestellt. Die Kraft 507 ist die auf das Schmelzgut wirkende resultierende Kraft.

Durch das MHD-Rühren im Zwischenspeicher/Bereitstellungsbereich (508) werden die Teilverfahrensschritte thermische Homogenisierung der Schmelze, Durchmischen der Schmelze, Reduktion von Poren, gleichmäßige Verteilung von Kristallisationskeimen, Beseitigung von Verunreinigungen und Beeinflussung der Abkühlungsgeschwindigkeit vor dem Druckkopf (510) durchgeführt.

Über den Verfahrensschritt **S5b** wird neben der Verarbeitung von Halbzeugen 501 auch die Verarbeitung von Zusatzwerkstoffen ermöglicht. Hierzu können dem Zwischenspeicher/Bereitstellungsbereich 508 ergänzend und/oder getrennt zu S4 über mindestens eine Zuführung 506 weitere Werkstoffe zugeführt werden. Beispielhaft kann dies das Beimischen von zusätzlichen Legierungsbestanteilen oder das Beimischen von Recyclingwerkstoffen in die Schmelze 524 sein. Vorzugsweise werden diese Materialien in Granulatform dem Schmelztiegel 523 zugeführt, um den Schmelzvorgang im Schmelztiegel zu beschleunigen (Reduzierung des Einflusses des Skin-Effektes).

Der Schmelztiegel 523 dient auf diese Weise als Zwischenspeicher, der mit dem Druckkopf 510 gekoppelt ist.

Die Verfahrensschritte **S5a** und **S5b** sind hierzu steuer- und regelungstechnisch gekoppelt, damit die prozessbeeinflussenden Parameter, wie Stromstärken, Magnetfeldrichtungen (Rühren), Transportieren etc., der Mengenänderung der Schmelze 524 angepasst werden können.

Durch die Homogenisierung der Schmelze, die Reduktion von Poren, die gleichmäßige Verteilung der Kristallisationskeime sowie der Beeinflussung deren Anzahl durch das Abkühlverhalten der Schmelze vom Druckkopf 510 kann die Metallschmelze optimal an die Anforderungen eines Elektrobleches für eine Rotorscheibe angepasst werden.

Im Verfahrensschritt **S6** wird in einem für den Druckprozess erforderlichen Zeittakt (Flüssigvolumen-Bereitstellung) das Flüssigmetall dem Druckkopf 510 durch Schwerkraft zugeführt. Das Entleeren des Zwischenspeicher/Bereitstellungsbereiches 508 kann aber auch vorteilhaft durch ein elektrodynamisches Transversalfeld 505 in der Zuführgeschwindigkeit beeinflusst werden (beschleunigen/verzögern) (vergleiche mit Verfahrensschritt "Transportieren der Schmelze S4").

In einem nicht weiter im Detail beschriebenen Verfahrensschritt erfolgt die Tropfenerzeugung für die additive Herstellung des Elektrobleches innerhalb bekannter Funktionen in Druckköpfen. Druckköpfe 510, wie sie in DE 10 20022 101 340 A1 und WO2007038987 A1 beschrieben werden, verwenden das MHD- Verfahren als elektrodynamisches Pumpprinzip zur Tropfenerzeugung.

Durch eine Anpassung einer nicht im Detail beschriebenen mechanischen und elektrischen Schnittstelle 509 an die zuvor genannten Verfahrensmodule können diese in die erfindungsgemäße Verfahrenskette eingefügt werden.

Der nachfolgende Verfahrensschritt **S7** bedingt eine Änderung der Düsengestaltung gegenüber derzeitiger Druckköpfe. Die Spulenanordnungen 511 zur Erzeugung von Magnetfeldern werden derart gestaltet, dass die Schmelzvolumina innerhalb der Düse 512 wie auch im Verfahrensschritt **S5a** über die generierten Magnetfelder die Viskosität und Keimbildung über eine Temperaturbeeinflussung der Schmelzen gesteuert werden kann, eine Homogenisierung durch MHD-Rühren durchgeführt und eine Beeinflussung der Schmelzströmung(beschleunigen/bremsen) innerhalb der Düse 512 erwirkt werden kann. Hierzu ist die Düse 512 umgeben mit den Spulenanordnungen 511. Auch hier sind die Spulenanordnungen, sowohl für das MHD-Rühren 508, als auch für die Erzeugung einer Kraft für das Transportieren der Schmelze und der Schmelztropfen 507 - vergleichbar mit der Funktionsrealisierung innerhalb von Verfahrensschritt **S5a** - abhängig von der konstruktiven Ausführung der Düse 512 und deshalb in **Fig. 5** nicht detailliert dargestellt.

Zur Synchronisierung des Rührens, Transportierens und Temperierens ist auch dieser Verfahrensschritt steuerungstechnisch und kommunikationstechnisch nach **Fig. 3** mit den anderen Verfahrensschritten gekoppelt.

Ergänzend wird über das elektromagnetische Feld der Spulenanordnung gegenüber Verfahrensschritt **S5a** eine vorzeitige Abkühlung der Schmelze bzw. der Schmelzentropfen verhindert. Dies wird dadurch erreicht, dass in einem erforderlichen Zeittakt mindestens eine Spule als Induktor geschaltet wird. Weiterhin können über eine gezielte magnetohydrodynamische Beeinflussung des aus der Düse 512 austretenden Metalltropfenstahls dessen turbulente Anteile über ein magnetisches Gleichfeld bedämpft werden, was sich positiv auf die Materialverteilung im Arbeitspunkt auf der Druckplatte/Aufbauplatte 514 auswirkt. Die Spulenanordnungen 511 sind also so anzusteuern, dass magnetische Wechselfelder und magnetische Gleichfelder in Amplitude und Frequenz überlagert werden können.

Zur weiteren Beeinflussung der Kristallisationsgeschwindigkeit innerhalb des Verfahrensschrittes **S7** ist die Druckkopfdüse 512 mit mindestens einer integrierten Zusatzdüse 519 zur Temperierung des gedruckten Werkstoffes ausgestattet. Die Zusatzdüse 519 kann aber auch extern angeordnet sein, um durch Temperaturbeeinflussung den Kristallisationsvorgang zu steuern.

Um eine Beeinflussung des im nachfolgenden Verfahrensschritt **S8** notwendigen Magnetfeldes zu vermeiden, ist das Magnetfeld im Düsenbereich vorteilhaft gegenüber der Ebene 513 des additiv gefertigten Werkstücks magnetisch zu isolieren.

Über das Ausbringen der Schmelze 524 an der Düse 512 auf die Druckplatte/Aufbauplatte 514 entsteht ein lokales Schmelzbad (Teilschmelze) als Teilgeometrie 204 des Werkstückes, also einer Elektroblechscheibe für einen Rotor, wie beispielhaft in **Fig. 2** gezeigt. Die Relativbewegung zwischen der Düse 512 (TCP - Tool-Center-Point) und dem bewegungsausführenden Teil 518 der Maschine für die Additive Fertigung ergibt über die Bewegungsteuerung der 3-D-Druckmaschine die Gesamtgeometrie des Rotorbleches. Die Summe der abgekühlten Teilschmelzen ergibt also eine einzelne Scheibe aus einem weichmagnetischen Material für einen geblechten Rotor mit optimalen, spezifischen elektrodynamischen Eigenschaften.

Die Summe der Teilbewegungen zur Erzeugung eines einzelnen Rotorbleches kann vorteilhaft, aber nicht zwingend, zerlegt werden in Teilbewegungen, innerhalb derer das Schmelzbad zusätzlich einer magnetohydrodynamischen Beeinflussung unterliegt, und in einen Bereich, der dem konventionellen Materialauftrag unterliegt.

Ein wesentlicher Verfahrensschritt (S8) des erfindungsgemäßen Verfahrens wird durch die Beeinflussung der Tropfenschmelze über Magnetfelder während der Bahnbewegung zwischen der Düse 512 in **Fig. 5** und dem die Bewegung ausführenden Teil 518 der Maschine für die Additive Fertigung und während deren Erstarrungsvorgangs auf der Druckplatte/Aufbauplatte 514 bzw. beim Druck mehrerer aufeinanderliegender Schichten, bei deren Erstarren auf den vorangegangenen Schichten, gebildet.

Die vorangegangenen Verfahrensschritte S1 bis **S7** in Fig. 3 betreffen eine verbesserte, maschinenintegrierte, modular strukturierte Materialbereitstellung in Form hochwertiger Metallschmelzen für die Additive Fertigung von Elektroblechen für Rotoren.

Diese Anordnung zur Materialbereitstellung kann generell auch für andere metallische Werkstoffe verwendet werden, um hochwertige anwendungsspezifische Schmelzen für die Additive Fertigung bereitzustellen.

Verfahrensschritt **S8** in **Fig. 3** wird gebildet über sechs Teilverfahrensschritte, die in ihrer Gesamtheit die Herstellung von Elektroblechen für Reluktanzmotoren mit verbesserten magnetischen Eigenschaften bewirken. In **Fig. 4** sind herstellungsbestimmende Verfahrensschritte ergänzend in einer Unterteilung dargestellt.

Um die Schmelze während des Erstarrungsvorgangs über die Einheit zur Magnetfelderzeugung 515 nach **Fig. 5** beeinflussen zu können, ist diese in einem Verfahrensschritt **S8.1** in ihrer geometrischen Ausgestaltung und nach dem herzustellenden Motortyp in ihrer Magnetfeldgenerierung anzupassen. Die Anpassung betrifft auch die Größe der geometrischen Fläche der Druckplatte/Aufbauplatte 514, angepasst an die Größe eines zu druckenden Elektroblechs, zum Beispiel nach 204 in Fig. 2.

Der nachfolgende Verfahrensschritt **S8.2** beinhaltet die Magnetfeldgenerierung 515 **(****Fig. 6****)** mit einem Magnetfeldgenerator 601 und damit die Flusserzeugung zur Schmelzbeeinflussung im Arbeitspunkt der Düse 512.

Verfahrenstechnisch wird hier die Eigenschaft genutzt, dass man Metallschmelzen unter bestimmten Voraussetzungen auf Temperaturen unterhalb des Schmelzpunkts abkühlen kann, ohne dass sie schon zum Festkörper erstarren.

Innerhalb dieses Unterkühlungsbereiches zwischen Curie-Temperatur und Erstarrungstemperatur und unterhalb der Erstarrungstemperatur wird der Kristallisationsvorgang der momentanen Teilschmelze über die Magnetfelder der magnetfelderzeugenden Einrichtung 515, die in ihren geometrischen Größen angepasst ist an die Geometrie der zu druckenden Elektrobleche, durch MHD-Rühren 601 der Schmelze im Arbeitspunkt und durch überlagerte statische und dynamische Wechselfelder 601 beeinflusst. Die Ansteuerung kann auch derart erfolgen, dass zur Erfüllung der gewünschten Funktion nur statische oder nur dynamische Felder erzeugt werden.

Die Beeinflussung der Schmelze im Verfahrensschritt **S8.3** in **Fig. 4** erfolgt derart, dass zum magnetischen Rühren und zur Erzeugung eines gerichteten magnetischen Flusses ein Statoraufbau, vergleichbar mit demjenigen eines Asynchronmotors, vereinfacht und beispielhaft als Magnetfeldgenerator 601 in der Aufsicht 604 auf den Druckbereich in **Fig.** 6 dargestellt, zur Flusserzeugung im Druckbereich des zu erzeugenden Elektrobleches eingesetzt wird. Ein Unterschied besteht jedoch darin, dass die Polpaarzahl des flusserzeugenden Magnetfeldgenerators übereinstimmt mit der Polpaarzahl des zu druckenden Elektrobleches. Dies wird in Fig. 6 verdeutlicht, in dem der generierte Flussverlauf 602 in einem Bereich 603, in dem auch Flusssperren eingebracht werden können, einmal für ein Elektroblech eines Motors mit der Polzahlpaar 2 und einmal mit der Polpaarzahl 3 dargestellt wird.

Der Magnetfeldgenerator 601 wird zum Rühren, zur Beeinflussung des Kristallisationsvorganges, zur Bedämpfung der Schmelze und dgl. herangezogen.

Das elektromagnetische Feld kann für das erfindungsgemäße Verfahren hierbei durch ein dem gewünschten Prozessergebnis erforderliches, in der Frequenz und Amplitude einstellbares Wechselfeld und/oder einem überlagerten, in der Amplitude einstellbares Gleichfeld gesteuert werden, das der gewünschten Flussrichtung entspricht. Beispiele hierfür sind der Feldlinienverlauf 203 in Fig. 2 oder der Feldlinienverlauf 602 in Fig. 6. Erreicht werden kann dies durch MHD-Rühren und/oder durch Erzeugung einer Anisotropie. Die Magnetfeldbeeinflussung kann hierbei gesteuert zwischen zwei benachbarten Polen erfolgen oder über alle Pole. Die Vorgabe des Wechselfeldanteils erfolgt zwischen einer vorbestimmten Polpaarzahl, der Gleichfeldanteil kann vorzugsweise über alle Pole des Magnetfeldgenerators 601 erfolgen.

Die Tatsache, dass für jede Motorgeometrie für den Rotordruck ein angepasster, flusserzeugender Magnetfeldgenerator 601 eingesetzt werden muss, zeigt, dass auch der Bereich des Elektroblechdruckes **(S8.1 bis S8.4)** vorzugsweise in einer Modultechnik ausgeführt wird.

Vorteilhaft, aber nicht zwingend für das erfindungsgemäße Verfahren ist es, wenn das Aufbringen des Schmelzguts in Tropfenform oder als plastischer Strang in Richtung des magnetischen Flusses 602 erfolgt, der zuvor über eine Simulation des Flussverlaufs im Rotorblech/Statorblech innerhalb des Verfahrensschritts **S 8.2a** ermittelt wird.

Besonders vorteilhaft wirkt sich diese Vorgehensweise für die Herstellung von Elektroblechen für Reluktanzmotoren mit Flusssperren 201 (Fig. 2) zur optimalen Flussführung im Rotor aus. Anstelle homogener Rotorbleche besteht der Läufer dieses Rotortyps aus Blechen mit speziell geformten Konturen, die den magnetischen Fluss gezielt führen (Flussstege 202 oder Flusssperren 201). Die besonders gestalteten Flussstege der Pole (d-Achse) und die Flusssperren (aus Luft) in den Lücken (q-Achse) sind für einen vorteilhaften Betrieb des Motors wichtig. Durch die Flussführung 602 nach Fig. 6 während der Additiven Fertigung solcher Rotorbleche durch das erfindungsgemäße Verfahren ist eine wesentliche Verbesserung der Motoreigenschaften zu erwarten.

Ziel der Verfahrensschritte S8.2 bis S8.3a ist es letztendlich, die Hystereseform im gedruckten Elektroblech anwendungsspezifisch zu optimieren. Hierzu ist zum einen die Behinderung von Blochwandbewegungen im weichmagnetischen Material durch das erfindungsgemäße Verfahren zu beseitigen, zumindest aber stark zu reduzieren, indem die Störstellen im Werkstoff über die Magnetfeldbeeinflussung mittels HD-Rühren 515 beseitigt bzw. zumindest reduziert werden, zum andern eine elektromagnetische Anisotropie zu induzieren.

Durch diese Verfahrensschritte resultiert eine Verfeinerung der magnetischen Domänen - das entspricht der Vergrößerung der Zahl der beweglichen Blochwände - und führt zur Verringerung der Gesamtverluste beim Einsatz der so gefertigten Elektrobleche für den Rotor des Reluktanzmotors.

Der Wechselanteil des elektromagnetischen Feldes bewirkt dabei eine Homogenisierung des Schmelzguts hinsichtlich seiner Legierungsbestandteile, eine thermische Homogenisierung des Schmelzguts im momentanen Druckbereich, eine Beeinflussung der Kristallisation im momentanen Arbeitspunkt der Druckdüse 512, des Druckkopfs 510 und damit auch die Größenordnung des Unterkühlungsgrades (siehe auch Korngrößenbeeinflussung in Verbindung mit einer Variothermie), eine Reduzierung von unerwünschten Einschlüssen als Defekte im Metallgefüge und eine Reduzierung von Poren durch Eliminieren von gelösten Gasen im momentanen Schmelzbad (Reduktion von Lunkern und Seigerungen).

Das eingeprägte Gleichfeld führt zu einer Art Anisotropie (Textur), die dadurch gekennzeichnet ist, dass sie eine Kristallausrichtung in Flussrichtung der späteren Anwendung einprägt, also in Flussrichtung der Feldlinien 203 (Fig. 2) beim Bestromen eines Reluktanzmotors im Rotor. Es wird erwartet, dass in der eingeprägten Flussrichtung 602 (Fig.6) sich eine höhere Magnetisierbarkeit und geringere Magnetisierungsverluste für das Elektroblech ergeben, was sich in einem vorteilhaften, anwendungsbezogenen Verlauf der Hysteresekurve äußert. Weiterhin erfolgt eine Beruhigung der Schmelze im Arbeitspunkt durch das Gleichfeld die Schmelze, was sich positiv auf die Oberflächenrauigkeit des gedruckten Elektrobleches auswirkt.

Die Amplitude des Gleichfeldes ist hierbei wesentlich größer als diejenige des hochfrequenten Wechselanteils; die Vorgabe der notwendigen jeweiligen Werte ist von dem in der Zeiteinheit zu verarbeitenden Materialvolumen, der Werkstofflegierung, dem momentanen temperaturabhängigen Werkstoffzustand (Kristallisationsgrad) und den erforderlichen Abkühlgeschwindigkeiten abhängig.

Die Sollwerte für eine Ansteuerung des magnetfelderzeugenden Stators 515 können vorzugsweise als Ergebnis einer Simulation eines digitalen Zwillings als Ergebnis einer simulativen Ermittlung des Erstarrungsgefüges erfolgen, aus der auch die Bahnerzeugung für das Drucken des Elektrobleches entlang der Flusslinien abgeleitet werden kann **(S8.2a).** Das Verhältnis von Prozesszeitkonstanten für das Ausbringen des flüssigen Schmelzguts zu den Rechenzeiten, die zur Echtzeitbestimmung der Sollwerte erforderlich ist, ermöglicht diese Vorgehensweise. Es können aber auch experimentell ermittelte Parameter zur Einstellung von Feldstärken sowie Wechselfeldfrequenzen und Gleichfeldanteile für die MHD-Prozessführung dienen.

Über die Abkühlgeschwindigkeit wird das Kornwachstum der erstarrenden Schmelze bestimmt. Vorzugsweise ist eine Beeinflussung hinsichtlich größerer Korngrößen gewünscht.

Eine zusätzliche Vergrößerung der Permeabilität kann dadurch bewirkt werden. Hierzu werden die integrierten Kühl- und Erwärmungsmöglichkeiten in der Düse 512, die Zusatzdüsen 519 und/oder eine Temperiereinheit 516 der Druck- und Aufbauplatte 514 mit den notwendigen Steuergrößen beaufschlagt. Mit der Temperiereinheit 516 kann die Temperatur der Druck/Aufbauplatte 514 einfach angepasst werden. Die gerätetechnischen Ausbildungsmöglichkeiten für die Funktionen Erwärmen/Abkühlen sind vielfältig; sie sind deshalb nur beispielhaft in Fig. 5 schematisch dargestellt. Der Gefügezustand nach dem Druck entscheidet über die Anwendung der jeweiligen Kühl- und Erwärmungsmöglichkeit.

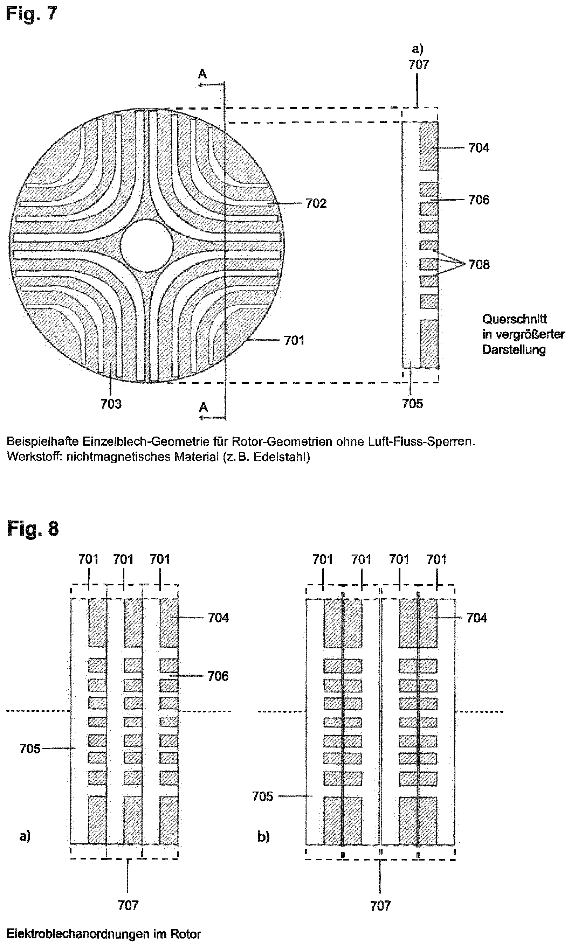

Um die Beeinflussung der Schmelze - insbesondere im momentanen Arbeitspunkt - vorteilhaft auszuführen, ist - abweichend von der Ausbildung der Druckplatte/Aufbauplatte nach dem Stand der Technik - eine verfahrensangepasste Gestaltung erforderlich, so dass die zuvor genannten Verfahrensschritte umgesetzt werden können. Grundsätzlich ist die Druckplatte/Aufbauplatte 514 - genauso wie die Adaption des Magnetfeldgenerators/Stators 515 - der gewünschten Geometrie des Elektrobleches 701 (Fig.7) für den Rotor anzupassen.

Um eine Verbindung der Schmelze beim Druck mit der Druckplatte/ Aufbauplatte 514 zu verhindern, ist diese mit temperaturabhängig elektrisch leitenden, marktgängigen Hochtemperatur-Keramikbeschichtungen 526 zu versehen. Diese Beschichtungsmethoden sind bekannt und werden deshalb nicht weiter erläutert.

Die Ergänzung mit einer Suszeptorschicht (z.B. Graphit) 525 ermöglicht die Umsetzung des MHD-Rührens und des Beeinflussens der Schmelze im unterkühlten Bereich. Die Wirkungsweise entspricht damit demjenigen des MHD-Rührens über magnetische Wechselfelder in einem offenen Schmelztiegel (S8.2). Die hohen magnetischen Widerstände (Luft) zwischen den Polen des Stators als Magnetfeldgenerator sind damit eliminiert.

Der Temperaturbereich der Schmelze und deren Abkühlungsgeschwindigkeit bestimmen u.a. deren Unterkühlbereich, der für die Dauer einer magnetohydrodynamischen Beeinflussung von Bedeutung ist.

In einem weiteren Verfahrensschritt **(S8.3a)** wird deshalb ergänzend zur thermischen und magnetischen Beeinflussung im unterkühlten Bereich das Abkühlungsverhalten der Druckplatte mit der Teilschmelze und den schon teilerstarrten Druckbereichen hinsichtlich der Abkühlgeschwindigkeit mittels der Temperiereinheit 516 (Fig. 5) gesteuert beeinflusst, um eine frühzeitige Randzonenerstarrung zu verzögern und die Gefügebildung zu beeinflussen. Da die zu erzeugenden Elektrobleche eine geringe Bauhöhe haben (z.B. 0.2 mm - 1.0 mm), ist eine Temperierung angelehnt an die Variothermie durchführbar.

Unter Variothermie versteht man eine dynamische, lokale Erhöhung der Temperatur von Bauteilen mittels bauteilintegrierter Wärmequellen zur Viskositätsbeeinflussung, vornehmlich in dünnwandigen Kanälen. Als Wärmequellen dienen häufig laserintegrierte Induktoren zur Wechselfelderzeugung etc. Sie stellt eine bekannte Technik dar und wird deshalb nicht weiter erläutert.

Die Druckplatte/Aufbauplatte 514 wie in Fig. 5a dargestellt ist hierzu vorzugsweise in Richtung der eingeprägten Flussrichtung 602 (Verlauf der Stege des zu generierenden Elektrobleches) zwischen den Polen des Magnetfeldgenerators 601 geometrisch so gestaltet, dass ein Minimum an Druckplatten-/Aufbauplatten-Material thermisch beeinflusst werden muss (geringe Dicke der Druckplatte/Aufbauplatte). Es kann aber auch der gesamte Bereich der Flusssperren 603 als extrem dünne Scheibe ausgeführt werden. Eine hohe, prozessbedingte Temperiergeschwindigkeit ist dadurch erzielbar. Die Bereiche der erstarrten Schmelze können, da keine zeitkritische Prozessbeeinflussung gegeben ist, über eine induktive Erwärmung temperiert werden. Die Druckplatte in Fig. 5a bildet also ein geometrisches Spiegelbild 527 des Verlaufs der gedruckten Weicheisenlegierung zur Flussführung 603 des zu druckenden Rotorbleches 701, wie es beispielshaft in Fig. 7 dargestellt ist, und ist dessen jeweiliger Endgeometrie anzupassen.

Die Druckplatte/Aufbauplatte 514 kann aber auch aus einem nichtmagnetischen Material bestehen, wobei diese dann auf der Oberfläche, die der Druckdüse zugewandt ist, mit einer in einem zuvor erfolgten Verfahrensschritt mit einer Suszeptorschicht versehen wurde. Diese Schicht bildet den Verlauf des gewünschten magnetischen Flusses des zu druckenden Elektrobleches ab. Hierdurch ist es möglich, die Druckpatte/Aufbauplatte 514 gezielt über Induktion zu temperieren, um den Kristallisationsvorgang zu beeinflussen.

Die weiteren Verfahrensschritte **(S9)** bestehen in der Beschichtung der gedruckten Bleche mit einer Isolationsschicht in einem nachfolgenden additiven Prozess über einen parallel arbeitenden Druckkopf, der Entnahme des additiv hergestellten Rotorblechs von der Druckplatte (Aufbauplatte) und der Paketierung der Elektrobleche (Blechstapel) zum Rotor.

Werden mehrere Schichten aufeinander gedruckt, dann wird zuvor die Lage der Druckplatte/Aufbauplatte 514 über den bewegungsausführenden Teil 518 in Fig. 5 der Maschine um eine Blechstärke des Rotorblechs abgesenkt (528). Auf diese Weise wirkt die Magnetfelderzeugung immer in der Druckebene 513. Dieser Prozessschritt wiederholt sich bis zur Fertigstellung des Rotors.

Es können auch Rotorbleche mit unterschiedlichen Werkstoffen (z.B. unterschiedliche elektrische Leitfähigkeiten) innerhalb ein und desselben Bleches gedruckt werden. Hierzu drucken zwei Druckeinrichtungen mit demselben Verfahren 517, jedoch unterschiedlichen Halbzeugen 501 parallel zusammen, indem die aktuellen Geometrien zur Bahnerzeugung steuerungstechnisch nach 301 ausgetauscht werden und die zu druckenden Bereiche 603 mit dem jeweiligen Werkstoff ausgefüllt werden.

Sollen Einzelbleche mit Isolationsschichten beschichtet werden, dann kann dies nach dem Druck der Rotorbleche in konventionellen Maschinen zur Additiven Fertigung - die hier nicht aufgeführt sind - durchgeführt werden.

Eine weitere, ergänzende Verfahrenskette **(S 8.4)** ist dadurch gegeben, dass auf die Druckplatte/Aufbauplatte 514 ein geprägtes Trägermaterial 705, aufgelegt wird und das über seine geometrische Gestaltung die Möglichkeit hat, das magnetisch aktive Weicheisen 704 durch das Additive Druckverfahren aufzunehmen **(****Fig. 7****).** Die Außenkontur 707 des Trägermaterials 705 entspricht dem Umriss des fertigen Einzelbleches. An der einen Seite des scheibenförmigen Trägers 705 wird durch einen Prägevorgang eine Struktur in Form von Vertiefungen 708 eingebracht, in die die Weicheisenlegierung 704 zur Bildung der Flussführungen 703 eingebracht wird. Die Vertiefungen 708 haben somit einen Verlauf entsprechend den Flussführungen 703 des fertigen Einzelbleches (Fig. 7). Wie sich aus Fig. 7a ergibt, haben die Vertiefungen 708 vorteilhaft gleiche Tiefe und sind vollständig mit der Weicheisenlegierung 704 gefüllt.

Der Träger 705 besteht aus nichtmagnetischem Material, z.B. aus Edelstahl. Aufgrund der beschriebenen Gestaltung hat das Einzelblech keine Luft-Fluss-Sperren. Die die Vertiefungen 708 begrenzenden Stege 706 des Trägers 705 bilden die Flusssperren 706. Dieses Formblech wird für jeden Druck eines einzelnen Elektrobleches zwischen Druckplatte/Aufbauplatte 514 und Düse 512 gelegt. Das Ergebnis nach dem Druck ist in der Draufsicht 701 dargestellt. Die bisher dargestellte Verfahrenskette wird beibehalten.

Die Erweiterung erfolgt im Verlauf von Verfahrensschritt **S7** und vor der Durchführung von Verfahrensschritt **S8.** Das Trägermaterial 705 ist aus nichtmagnetischem Material durch massivvertiefende Prägung gefertigt und entspricht zusammen mit dem durch Additiven Druck ergänzten Bereichen 704 für den magnetischen Fluss einem einzelnen Elektroblech für einen Rotor 707. Die flusssperrenden und flussführenden Bereiche 702 und 703 werden durch massivvertiefende Prägung hergestellt. Vorteilhaft für diese erfindungsgemäße Herstellung eines Elektrobleches ist, dass kein Isolationslack zwischen den einzelnen Rotorblechen erforderlich ist und die Verluste im Rotor-Blechstapel reduziert werden. Ferner kann die durch Prägung entstehende Struktur problemlos die mechanischen Beanspruchungen auf die Elektrobleche aufnehmen.

Eine weitere Möglichkeit, die Elektrobleche nach der erweiterten Verfahrenskette herzustellen, besteht darin, dass der Druck mit einer Weicheisenlegierung zur Flussführung ersetzt wird durch einen Druck mit auf dem Markt erhältlichen Ferritpasten zur Flussführung. Die wesentlichen Teilverfahrensschritte **S8.1** bis **S8.3** in der Verfahrenskette **S8** nach **Fig. 4** bleiben erhalten. Der Druckkopf 510 wird durch einen geeigneten Druckkopf für diese Material ausgetauscht, ebenso die Materialbereitstellung hierfür.

Geeignete Druckköpfe hierzu sind auf dem Markt erhältlich. Deren Funktionsweise ist derart, dass das über Extruder zugeführte, pastöse Material auch innerhalb des Druckkopfes über eine Extruderanordnung weiter zur Düse des Druckknopfes transportiert und dort ausgestoßen wird. Exemplarisch sind hier die Druckköpfe für den 3-D-Druck von Beton zu nennen. Für das vorliegende Verfahren bedeutet dies, dass das pastöse Material anstelle des flüssigen Metalls über einen Extruder zum Zwischenspeicher 523 transportiert und über den ausgetauschten Extruder-Druckkopf und die Druckkopfdüse auf der Druckplatte/Aufbauplatte aufgetragen wird.

Durch die Umsetzung des Verfahrens als modulare Struktur ist eine Verfahrenserweiterung dieser Art technisch einfach umzusetzen.

In **Fig. 7 und 8** sind die Querschnitte der Trägerstruktur zum besseren Verständnis vergrößert dargestellt. Die Prägetiefe bestimmt die Dicke der flussführenden Schicht 704; sie entspricht quasi der gewünschten bzw. erforderlichen Dicke eines konventionellen Elektroblechs (beispielhafte Dickenbereiche zwischen 0.1 und 2 mm). Die verbleibende Schichtdicke des Trägers 705 kann auf ein Minimum reduziert werden (Bruchteile von mm), da durch den Prägevorgang eine versteifende Wirkung für den Träger eintritt. Eine Beeinflussung des Abkühlvorgangs der Schmelze beim Druck mittels Variothermie durch die Temperiereinheit 516 ist dadurch weiterhin gewährleistet.

**Fig. 8** zeigt beispielhaft zwei mögliche Anordnungen von Elektroblechen zur Ausbildung eines Rotors nach dem erfindungsgemäßen Verfahren. Das Blechpaket wird durch die aufeinander liegenden Einzelbleche 701 gemäß Fig. 7 gebildet. Es hat die Flusssperren 702 und die Flussführungen 703.

Bei der Ausführungsform gemäß Fig. 8a werden die Einzelbleche 701 gleichsinnig zum Blechstapel aufeinandergesetzt.

Fig. 8b zeigt die Möglichkeit, jeweils benachbarte Einzelbleche 701 um 180° gewendet aufeinander zu setzen.

Im Vorhergehenden ist das Verfahren im Zusammenhang mit einem Innenläufer beschrieben worden. Es sind aber auch solche Bauweisen anzutreffen, bei denen der bewegliche Teil - der Rotor - außenliegend ist. Für diese Bauweisen gelten aber die identischen, funktionellen Gestaltungsmerkmale für die Rotorbleche.

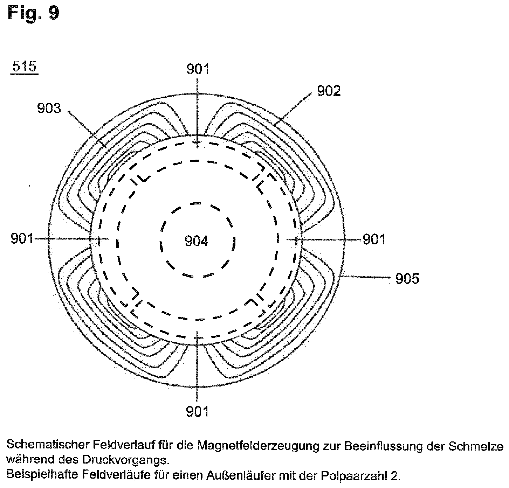

Fig. 9 zeigt beispielhaft einen solchen Außenläufer, bei dem der Rotor den Stator umgibt. Der Außenläufer hat eine beispielhafte Polpaarzahl von 2.

Fig. 9 zeigt den schematischen Feldverlauf für die Magnetfelderzeugung zur Beeinflussung der Schmelze während des Druckvorganges.

Die Herstellung erfolgt mit der Gesamtheit 517 (Fig. 5), wobei die Magnetfelderzeugung mittels statorähnlichem Aufbau erfolgt, angepasst an die Geometrie der zu druckenden Elektrobleche zur Materialbeeinflussung während des Druckvorganges.

Fig. 9 zeigt die innen liegenden Magnetfeldgeneratoren 901, mit denen ein Rührvorgang, eine Beeinflussung des Kristallisationsvorganges, eine Bedämpfung der Schmelze etc. erfolgt, wie anhand des Ausführungsbeispieles für einen Innenläufer oben beschrieben ist.

Mit 902 ist ein beispielhaft generierter magnetischer Fluss-Feldverlauf durch eine Simulation dargestellt. Der Verlauf 902 entspricht vorteilhaft der Bahn der Druckkopfdüse (TCP=Tool-Center-Point).

903 zeigt den Bereich der schon beschriebenen Flusssperren. Mit 904 ist die Aufsicht auf den Druckbereich bezeichnet. Die Druckplatte/Aufbauplatte (s. Fig. 5) hat die Kontur 905, die der Außenkontur der beschriebenen Keramikbeschichtung sowie der gegebenenfalls vorhandenen Suszeptorschicht entspricht.

### Bezeichnungen:

Fig. 1:
   - 101: Feldlinienverlauf
   - 102: Ausgeprägte Pole des Elektrobleches
   - 103: Rotor
   - 104: Statorpole
   - 105: Erregerspulen
Fig. 2:
   - 201: Flusssperren im Rotorblech; unterschiedliche, eigenschaftsbestimmende geometrische Verläufe
   - 202: Flussstege
   - 203: Feldlinienverlauf
   - 204: Elektroblech-Geometrie eines Reluktanzmotors mit Flusssperren
   - 205: Statorwicklung
   - 206: Statorblech
Fig. 3:
   - S 1:: Werkstoffzuführung als Halbzeug (Metalllegierung)
   - S 2:: Metalllegierung (Halbzeug) erwärmen und schmelzen; einstufig
   - S 3:: Metalllegierung (Halbzeug) erwärmen und schmelzen; mehrstufig
   - S 4:: Schmelze transportieren
   - S 5a:: Homogene Schmelze erzeugen, Gesamtschmelze zwischenspeichern, temperieren und MHD-Rühren
   - S 5b:: Ergänzende Legierungsbestandteile als Granulat und Schüttgut zuführen
   - S 6:: Schmelzgut dosiert in den Druckkopf transportieren
   - S 7:: Temperieren und Bedämpfen der Schmelze durch magnetisches Gleichfeld; Bewegungsbeeinflussung im Längsfeld und Schmelzgut in Tropfenform oder kontinuierlich als Teilschmelzen-Strang mit der Querschnittsgeometrie der Druckkopfdüse aus dem Drucckopf ausstoßen.
   - S 8:: Magnetohydrodynamische Beeinflussung der Schmelze und deren Erstarrungsvorganges während des Materialauftrags auf der Druckplatte/Aufbauplatte
   - S 9:: Verfahrensschritte zur Fertigstellung des Rotors nach dem Stand der Technik
   - 301: Steuerungs- und kommunikationstechnische Kopplung
Fig. 4:
   - S 8.1: Anpassung des Magnetfeldgenerators (Stator) und der Druck platte/ Aufbauplatte an die Geometrie des Elektroblechs
   - S 8.2: Magnetfeldgenerierung im Magnetfeldgenerator und Flusserzeu gung zur Schmelzbeeinflussung im Arbeitspunkt der Düse
   - S 8.2a: Berechnung der Magnetfeldparameter und des erforderlichen Flussverlaufs durch simulative Verfahren und experimentell er mittelten Parametern
   - S 8.3: Steuerung der induzierten Magnetfelder in Abhängigkeit der Bahngeschwindigkeit, der Materialauftragsvolumina und des Erstarrungszustandes der Schmelzen
   - S 8.3a: Steuerung der Abkühlgeschwindigkeit (Kristallisation) mittels Variothermie
   - S 8.4: Verfahrenstechnische Erweiterung der Verfahrensschritte S1-S8
Fig. 5:
   - 501: Weichmagnetisches Halbzeug, zugeführt über eine gesteuerte und geregelte Materialzuführung
   - 502: Schmelztiegel, im Beispiel als offener Tiegel
   - 503: Induktionssystem zum Erwärmen und Schmelzen des Halbzeugs
   - 504: Mehrere Schmelztiegel zur stufenweisen Erwärmung hintereinander angeordnet
   - 505: Längsfelderzeugung (Wanderfeld) zum richtungsbeeinflussenden Schmelzentransport und zur Temperierung
   - 506: Zuführung von zusätzlichen Legierungsbestandteilen und Recyclingwerkstoffen (Granulat)
   - 507: Resultierende Kraftrichtung auf das Schmelzgut
   - 508: Zwischenspeicher mit MHD- Rühr- und Transporteinrichtung und Temperierung
   - 509: Kopplung des Schmelztiegels im Zwischenspeicher an einen Druckkopf
   - 510: Druckkopf
   - 511: Spulen mit Magnetfelderzeugung geordnet um die Düse zur MHD- Beeinflussung der Schmelze im Düsenbereich
   - 512: Druckkopfdüse mit integrierter Kühlungsmöglichkeit und Erwärmung für den gedruckten Werkstoff zur Beeinflussung des Kristallwachstums
   - 513: Ebene des additiv gefertigten Elektroblechs
   - 514: Druckplatte/Aufbauplatte, im Bereich eingeprägter Flusslinien extrem dünne Bauhöhe für die variotherme Temperierung
   - 515: Magnetfelderzeugung mittels statorähnlichem Aufbau - angepasst an die Geometrie der zu druckenden Elektrobleche - zur Materialbeeinflussung während des Druckvorgangs.
   - 516: Temperiereinheit
   - 517: Schematische Darstellung der verfahrenstechnischen Komponenten in der Maschine
   - 518: Bewegung ausführender Teil der Maschine für die Additive Fertigung
   - 519: Zusatzdüsen zur ergänzenden Steuerung der Kristallisationsgeschwindigkeit durch Temperaturbeeinflussung
   - 520: Erwärmtes Halbzeug
   - 521: Teilflüssiger und flüssiger Zustand der Weicheisenlegierung
   - 522: Zuführeinheit
   - 523: Schmelztiegel als Zwischenspeicher, gekoppelt mit dem Drucckopf
   - 524: Metallschmelze
   - 525: Suszeptorschicht
   - 526: Hochtemperatur-Keramikbeschichtung
   - 527: Geometrischer Verlauf wie 703
   - 528: Absenkrichtung um Blechstärke beim Druck von massiven Rotoren
   - 529: Reduzierte Bauhöhe der Druckplatte/Aufbauplatte entsprechend dem eingeprägten Flussverlauf für die Variothermie
Fig.6:
   - 515: Magnetfelderzeugung mittels Stators ähnlichem Aufbau - angepasst an die Geometrie der zu druckenden Elektrobleche zur Materialbeeinflussung während des Druckvorgangs.
   - 601: Magnetfeldgeneratoren (Rühren, Beeinflussung des Kristallisationsvorgangs, Bedämpfung der Schmelze etc.)
   - 602: Beispielhaft generierter magnetischer Fluss= Feldverlauf durch Simulation = Bahn der Druckkopfdüse (TCP-Tool-Center-Point)
   - 603: Bereich der Flusssperren
   - 604: Aufsicht auf den Druckbereich
   - 605: Kontur der Druckplatte/Aufbauplatte; entspricht der Außenkontur der Keramikbeschichtung und der Suszeptorschicht
Fig 7:
   - 701: Geometrie eines Einzelbleches
   - 702: Geprägter Flusssperren-Verlauf aus nichtmagnetischem Material
   - 703: Verlauf der gedruckten Weicheisenlegierung zur Flussführung
   - 704: Weicheisenlegierung
   - 705: Geprägtes Trägermaterial
   - 706: Verbleibende Aufbaugeometrie als Flusssperre
   - 707: Außenkontur (Durchmesser) des Elektroblechs
   - 708: Prägestruktur in Form von Vertiefungen
Fig. 8: Möglichkeiten zur Anordnung von Elektroblechen
Fig. 9:
   - 515: Magnetfelderzeugung mittels statorähnlichem Aufbau - angepasst an die Geometrie der zu druckenden Elektrobleche zur Materialbeeinflussung während des Druckvorgangs für einen Außenläufer
   - 901: Magnetfeldgeneratoren (Rühren, Beeinflussung des Kristallisationsvorganges, Bedämpfung der Schmelze etc.)
   - 902: Beispielhaft generierter magnetischer Fluss=Feldverlauf durch Simulation=Bahn der Druckkopfdüse (TCP - Tool-Center-Point)
   - 903: Bereich der Flusssperren
   - 904: Aufsicht auf den Druckbereich
   - 905: Kontur der Druckplatte/Aufbauplatte;entspricht der Außenkontur der Keramikbeschichtung und der Suszeptorschicht.

   /1/ Schröder, D: Elektrische Antriebe- Regelung von Antriebssystemen. Böcker, J 5. Auflage, Springer-Vieweg 2020
   /2/ B. Halbedel et al.: Potentiale elektromagnetischer Kräfte zur Modifizierung von Glasschmelzen. 82.Glastechnische Tagung Hameln 2008
   /3/ Gässel, D.: 3D-printed motors-manufacturing principle and limits. 2020. https:/www.reseachgate.net/puplication/ 343933657
   /4/ Rudolph, et al.: Vollständig 3D-gedruckte geschaltete Reluktanzmaschine in Klauenpolausführung. Elektrotechnik & Informationstechnik 2019 136/2
   /5/ Neusüs, S.: Vergleich von Synchron-Reluktanzmotoren ohne und mit Ferritmagnetunterstützung. Dissertation 2021; Darmstadt

## Patentansprüche

1. Verfahren zur Herstellung von Blechen für Blechpakete eines Rotors und eines Stators für Drehstromantriebe, insbesondere für Reluktanzmaschinen (Reluktanzmotoren) aus weichmagnetischen Werkstoffen mittels additiver Fertigungsverfahren, bei dem der aufgeschmolzene Werkstoff wenigstens einem Drucckopf zugeführt wird, der den aufgeschmolzenen Werkstoff zur Bildung eines Rotors-/Statorbleches ausbringt und bei dem unterschiedliche magnetische Eigenschaften der dadurch erzeugten Druckbereiche geschaffen werden,
**dadurch gekennzeichnet, dass** der Werkstoff in der Flüssigphase auf einer Aufbauplatte (514) durch ein angelegtes Magnetfeld eines Stators/Rotors beim Übergang von der Flüssigphase in den festen Zustand so beeinflusst wird, dass das fertige Rotor-/Statorblech eine dem eingeprägten Feldverlauf ausgerichtete Flussrichtung höhere Leitfähigkeit ausweist, als in davon abweichenden Richtungen .

2. Verfahren nach Anspruch 1,
**dadurch gekennzeichnet, dass** die Schmelze im momentanen Arbeitspunkt einer Schichtenerzeugung durch ein magnetisches Feld, das um das zu druckende Rotorblech aufgebaut wird, in Flussrichtung gesteuert beeinflusst wird (Gefügebeeinflussung), wobei vorzugsweise das Magnetfeld zur magnetohydrodynamischen Beeinflussung einer Tropfenschmelze während der Kristallisation über einen statorähnlichen Feldaufbau in der Druckebene (513) erzeugt wird.

3. Verfahren nach Anspruch 1 oder 2,
**dadurch gekennzeichnet, dass** das Magnetfeld das zu druckende Elektroblech für einen Rotor umgibt.

4. Verfahren nach einem der Ansprüche 1 bis 3,
**dadurch gekennzeichnet, dass** die Anzahl der Pole zur Flusserzeugung des magnetischen Flusses in der Druckebene gleich der Anzahl der Pole des zu fertigenden Rotors ist, und dass in vorteilhafter Weise die geometrischen Größen des magnetfelderzeugenden Stators (Magnetfeldgenerator) (515) der gewünschten Rotorgröße angepasst werden.

5. Verfahren nach einem der Ansprüche 1 bis 4,
**dadurch gekennzeichnet, dass** das magnetische Feld oberhalb der Curie-Temperatur der Schmelze im momentanen Arbeitspunkt als steuerbares magnetisches Wechselfeld wirkt, wobei vorzugsweise das magnetische Feld unterhalb der Curie-Temperatur der Schmelze im momentanen Arbeitspunkt als steuerbares magnetisches statisches Feld (515) wirkt.

6. Verfahren nach einem der Ansprüche 1 bis 5,
**dadurch gekennzeichnet, dass** das eingeprägte magnetische Feld eine Überlagerung von Gleich- und Wechselfeld darstellt, wobei die statischen elektrischen Magnetfelder und die elektrischen Wechselfelder getrennt angesteuert werden können.

7. Verfahren nach einem der Ansprüche 1 bis 6,
**dadurch gekennzeichnet, dass** benachbarte Pole des magnetfelderzeugenden Stators zur Flusserzeugung angesteuert werden, wobei vorzugsweise alle Pole des magnetfelderzeugenden Stators zur Flusserzeugung angesteuert werden.

8. Verfahren nach einem der Ansprüche 1 bis 7,
**dadurch gekennzeichnet, dass** eine Druckplatte/Aufbauplatte (514) einer "Variothermen Temperierung" unterliegt, wobei vorzugsweise die Druckplatte/Aufbauplatte (514) hierzu ein geometrisches Abbild des über ein magnetisches Feld eingeprägten Flussverlaufes darstellt, das heißt, dass deren der Druckseite entgegen gerichteten Oberfläche Konturen (Vertiefungen) (527) aufweist, die den Verlauf des eingeprägten Flussverlaufes (603) widerspiegeln.

9. Verfahren nach einem der Ansprüche 1 bis 8,
**dadurch gekennzeichnet, dass** die Temperierung innerhalb der Vertiefungen (527) dem Verlauf des eingeprägten Flusses (603) erfolgt.

10. Verfahren nach einem der Ansprüche 1 bis 9,
**dadurch gekennzeichnet, dass** die Druckplatten/Aufbauplatten (514) zum Druck der Elektrobleche den geometrischen Größen der herzustellenden Rotoren bzw. Statoren angepasst sind, wobei vorzugsweise die Druckplatten/Aufbauplatten (514) in Richtung Materialauftrag mit einer Suszeptorschicht bedruckt sind, die im Verlauf des eingeprägten magnetischen Flusses (603) den magnetischen Widerstand eliminiert.

11. Verfahren nach einem der Ansprüche 1 bis 10
**dadurch gekennzeichnet, dass** zur Vermeidung einer Verbindung zwischen gedrucktem Werkstoff und Druckplatte/Aufbauplatte (514) diese mit einer Hochtemperatur-Keramikbeschichtung versehen ist, wobei vorzugsweise die Druckplatte/Aufbauplatte aus einem Suszeptormaterial besteht.

12. Verfahren nach einem der Ansprüche 1 bis 11,
**dadurch gekennzeichnet, dass** ein Träger (705) zur Aufnahme des flussführenden Materials (704) auf der Druckplatte/Aufbauplatte (514) eingelegt wird.

13. Verfahren nach einem der Ansprüche 1 bis 12,
**dadurch gekennzeichnet, dass** die Flussführung (602, 703) simulativ mittels digitalem Zwilling ermittelt wurde.

14. Verfahren nach einem der Ansprüche 1 bis 13,
**dadurch gekennzeichnet, dass** der Verlauf der Flusssperren (706) durch massivvertiefendes Prägen hergestellt wird.

15. Verfahren nach einem der Ansprüche 1 bis 14,
**dadurch gekennzeichnet, dass** die Geometrie des Trägers (705) zusammen mit den Anpassungen nach den Ansprüchen 5 und 10 durchgeführt wird.

16. Verfahren nach einem der Ansprüche 1 bis 15,
**dadurch gekennzeichnet, dass** die einzelnen Verfahrensschritte nach den Ansprüchen 1 bis 15 zur Herstellung von Elektroblechen (und massiven Rotoren bzw. Statoren) für Drehstromantriebe, insbesondere für Reluktanzmaschinen (Reluktanzmotoren) Teile eines Gesamtverfahrens darstellen und vollständig in ein Maschinensystem für die Additive Fertigung integriert sind, das vorteilhaft modular aufgebaut ist.

17. Verfahren nach einem der Ansprüche 1 bis 16,
**dadurch gekennzeichnet, dass** wenigstens ein Schmelztiegel (502) mit einer flüssigen Metalllegierung (524) zur Weicheisenherstellung in das Maschinensystem funktional integriert ist, wobei vorzugsweise mittels magnetohydrodynamischen Rührens eine für den Elektromotor anwendungsspezifische Legierung bereitgestellt wird.

18. Verfahren nach einem der Ansprüche 1 bis 17,
**dadurch gekennzeichnet, dass** die durch das MHD-Verfahren behandelte, poren- und blasenfreie, flüssige Metalllegierung (524) zu wenigstens einem Druckkopf (510) mittels MHD-Verfahren weitergepumpt wird, der vorteilhaft als Pumpe nach dem MHD-Prinzip ausgebildet ist und mit dem elektromagnetischen Rühren des Schmelztiegels (502) eine Einheit bildet.

19. Verfahren nach einem der Ansprüche 1 bis 18,
**dadurch gekennzeichnet, dass** der Rotor bzw. der Stator eines Reluktanzmotors mittels einer Flüssigmetalllegierung gemäß seinen anwendungsspezifischen Anforderungen schichtenweise aus homogenem Material als massiver Rotor bzw. Stator oder aus Werkstoffen unterschiedlicher magnetischer Leitfähigkeiten als massiver Rotor bzw. Stator gedruckt wird.

20. Verfahren nach einem der Ansprüche 1 bis 19,
**dadurch gekennzeichnet, dass** der Rotor bzw. Stator eines Reluktanzmotors mittels einer Flüssigmetalllegierung gemäß seinen anwendungsspezifischen Anforderungen schichtenweise aus gegeneinander elektrisch isolierenden Schichten oder aus Werkstoffen unterschiedlicher magnetischer Leitfähigkeiten und gegeneinander elektrisch isolierenden Schichten gedruckt wird, wobei vorzugsweise die Isolationsschicht über einen zweiten, abwechselnd oder parallel arbeitenden Druckkopf (510) aufgetragen wird.

21. Verfahren nach einem der Ansprüche 1 bis 20,
**dadurch gekennzeichnet, dass** die Pole des Stators nach einem vorab simulierten Flussverlauf angesteuert werden.

22. Verfahren nach einem der Ansprüche 1 bis 21,
**dadurch gekennzeichnet, dass** nach jeder gedruckten Schicht eine Wärmebehandlung mittels einem oder weiterer Druckköpfe (510) durchgeführt wird.

23. Verfahren nach einem der Ansprüche 1 bis 22,
**dadurch gekennzeichnet, dass** die Beeinflussung der Schmelze im Arbeitspunkt unter einer Schutzatmosphäre stattfindet.
